# EUROPEAN PATENT SPECIFICATION

(11) **EP 2 959 961 B1**
(45) Date of publication and mention of the grant of the patent: **24.04.2019**
(21) Application number: 14754157.7
(22) Date of filing: 14.02.2014
(51) Int. Cl.: B01D 53/86, B01D 53/62

(54) **EXHAUST GAS TREATMENT SYSTEM AND EXHAUST GAS TREATMENT METHOD**
ABGASBEHANDLUNGSSYSTEM UND ABGASBEHANDLUNGSVERFAHREN
SYSTÈME ET PROCÉDÉ DE TRAITEMENT DE GAZ D'ÉCHAPPEMENT

(30) Priority: 22.02.2013 US 201313774442
(43) Date of publication of application: 30.12.2015
(73) Proprietor: Mitsubishi Heavy Industries Engineering, Ltd., Nishi-ku Yokohama-shi Kanagawa 220-8401 (JP)
(72) Inventor: HONJO, Shintaro, Austin, Texas 78729 (US); YONEKAWA, Takahito, Austin, Texas 78729 (US); INUI, Masayuki, Austin, Texas 78729 (US); TSUJIUCHI, Tatsuya, Austin, Texas 78729 (US)
(74) Representative: Studio Torta S.p.A.
(86) International application number: PCT/JP2014/053499
(87) International publication number: WO 2014/129402

(56) References cited:
- EP-A1- 2 474 349
- EP-A1- 2 548 640
- WO-A1-2009/157434
- JP-A- 2011 115 724
- US-A1- 2010 290 977

## Description

### [Technical Field]

The present invention relates to an exhaust gas treatment system and an exhaust gas treatment method for treating an exhaust gas exhausted, for example, from a boiler or a turbine of an electric power facility.

### [Background Art]

In the related art, at a thermal power plant or the like, fossil fuel such as coal, oil or LNG is burned in a boiler to generate steam and power generation is performed by turning a steam turbine using this steam. Further, fuel such as light oil, kerosene, or natural gas is burned and compressed and power generation is performed by turning a gas turbine using a high temperature and pressure gas.

Meanwhile, since toxic substances such as sulfur oxide (SOx), particulate matter (PM) or carbon dioxide (CO₂), and impure substances are contained in an exhaust gas exhausted from a boiler or a turbine, for example, SO_{X}, PM and the like are removed by a desulfurization cooling apparatus, CO₂ is recovered and removed by a CO₂ recovery apparatus, and then the exhaust gas is released from a chimney to the atmosphere.

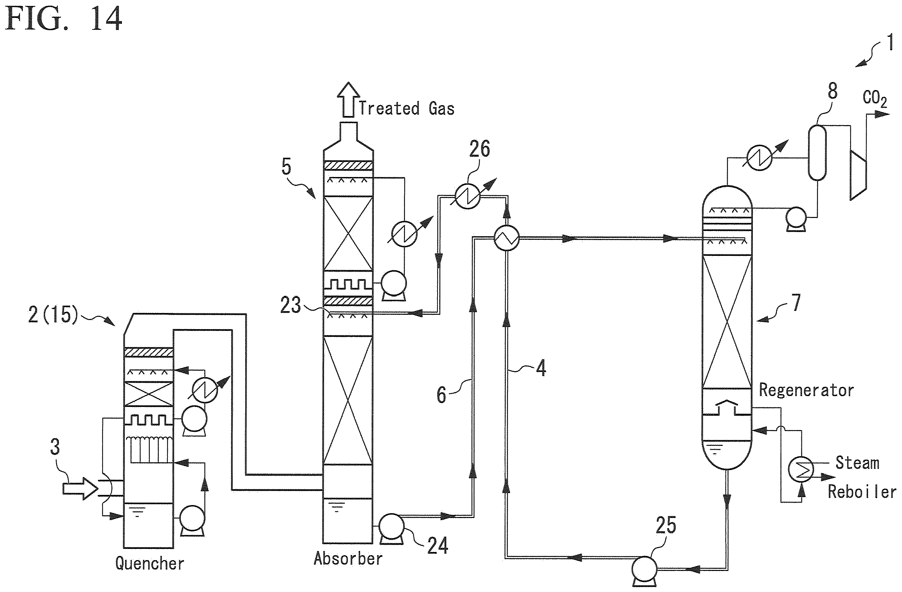

Further, as a CO₂ recovery apparatus 1, for example, as shown in FIG. 14, an apparatus including an absorption tower 5 that absorbs CO₂ from an exhaust gas 3 having a low temperature by being treated in a desulfurization cooling apparatus 2 by bringing the exhaust gas 3 into contact with an alkanolamine-based CO₂ absorption liquid (amine-based CO₂ absorption liquid; lean liquid 4), and a regeneration tower 7 that heats the CO₂ absorption liquid (rich liquid 6) having absorbed CO₂ in the absorption tower 5 to separate and recover CO₂ from the CO₂ absorption liquid 6 is widely used (e.g., see Patent Document 1 and Patent Document 2).

Further, the CO₂ absorption liquid 4 from which most CO₂ has been removed in the regeneration tower 7 is sent to the absorption tower 5 and used to absorb CO₂ again. In other words, in this CO₂ recovery apparatus 1, CO₂ is recovered and removed from the exhaust gas 3 while circulating the CO₂ absorption liquids 4 and 6 between the absorption tower 5 and the regeneration tower 7. Further, CO₂ recovered in the regeneration tower 7 is treated as compressed CO₂ in a compressor 8. For example, compressed CO₂ is used as CO₂ for Enhanced Oil Recovery (EOR) technology for increasing an amount of collected oil (crude oil) to increase a recovery rate of the oil, or is treated to be accumulated deep underground to prevent CO₂ from being released to the atmosphere and causing global warming.

### [Prior Art Document]

### [Patent Document]

[Patent Document 1] Japanese Unexamined Patent Application, First Publication No. 2011-036730
[Patent Document 2] Japanese Unexamined Patent Application, First Publication No. 2012-091083
[Patent Document 3] EP 2.548.640
[Patent Document 4] US 2010/290977

### [Summary of Invention]

### [Problems to be Solved by the Invention]

Here, for example, a large variety of volatile organic compounds (VOCs) such as toluene, xylene, and ethyl acetate as well as sulfur oxide (SO_{X}), particulate matter (PM), or carbon dioxide (CO₂) are contained in an exhaust gas exhausted from a boiler and a turbine. Further, when such VOCs are released to the atmosphere and sunlight (particularly, ultraviolet rays) is radiated in a state in which the VOC is mixed with a nitrogen oxide (NO_{X}), a photochemical oxidant is generated through a photochemical reaction. Accordingly, it is required to remove the VOC from the exhaust gas exhausted from the boiler and the turbine.

Meanwhile, when the exhaust gas is burned, the VOC in the exhaust gas can be decomposed and removed (reduced). However, since a large amount of exhaust gas is generated at a thermal power plant or the like, it is difficult to burn such a large amount of exhaust gas economically.

Further, for example, a scheme using a VOC decomposing catalyst in which a VOC decomposing catalyst (a VOC removal apparatus) is placed behind a gas turbine to remove the VOC from the exhaust gas is known. However, in this scheme, it is necessary to set a temperature of the exhaust gas to a high temperature equal to or more than 200 °C, preferably, 300 °C to reliably remove the VOC through a catalytic reaction.

Further, at a thermal power plant or the like, it is necessary to cool the exhaust gas to a low temperature in order to increase absorption efficiency of the CO₂ into CO₂ absorption liquid of a CO₂ recovery apparatus, and a temperature of the exhaust gas treated in the CO₂ recovery apparatus becomes, for example, about 30 to 40 °C. Accordingly, at the thermal power plant or the like, there is a great need for a scheme for removing CO₂ from the exhaust gas in the CO₂ recovery apparatus and removing the VOC from the exhaust gas in a VOC removal apparatus after the exhaust gas is treated by the CO₂ recovery apparatus.

### [Means for Solving the Problems]

According to the present invention there is provided an exhaust gas treatment system including a CO2 recovery apparatus that recovers CO2 from an exhaust gas exhausted from a boiler or a turbine, and a VOC removal apparatus that removes a VOC from the exhaust gas after the exhaust gas is treated by the CO2 recovery apparatus, the exhaust gas treatment system comprising: a heating device that heats an exhaust gas after the exhaust gas is treated by the CO2 recovery apparatus and before the exhaust gas is treated by the VOC removal apparatus; and a cooling device that cools the exhaust gas after the exhaust gas is treated by the VOC removal apparatus, a first heat exchanger that causes a heat medium to absorb a heat of the exhaust gas provided between the boiler or the turbine and the CO2 recovery apparatus (1), and a second heat exchanger that releases the heat from the heat medium supplied from the first heat exchanger to heat the exhaust gas after the exhaust gas is treated by the CO2 recovery apparatus, wherein the cooling device includes a third heat exchanger that causes a heat medium to absorb a heat of the exhaust gas after the exhaust gas is treated by the VOC removal apparatus, a fourth heat exchanger is provided, the fourth heat exchanger that releases the heat from the heat medium supplied from the third heat exchanger to heat the exhaust gas after the exhaust gas is treated by the CO2 recovery apparatus, the heating device further includes a steam heating apparatus that heats the exhaust gas using steam after the exhaust gas is treated by the CO2 recovery apparatus, and the steam heating the exhaust gas in the steam heating apparatus is steam generated in the boiler.

According to another aspect of the present invention, in the exhaust gas treatment system, the CO₂ recovery apparatus may include: an absorption tower that brings CO₂ absorption liquid in contact with the exhaust gas exhausted from the boiler or the turbine to absorb and remove CO₂ from the exhaust gas; and a regeneration tower that regenerates the CO₂ absorption liquid while releasing and recovering CO₂ from the CO₂ absorption liquid by heating the CO₂ absorption liquid having absorbed CO₂ in the absorption tower using steam, the cooling device may include a first exhaust heat recovery boiler that generates steam using heat of the exhaust gas after the exhaust gas is treated by the VOC removal apparatus, and the steam heating the CO₂ absorption liquid of the regeneration tower of the CO₂ recovery apparatus may be the steam generated by the first exhaust heat recovery boiler.

According to a further aspect of the present invention, in the exhaust gas treatment system, a fifth heat exchanger that causes a heat medium to absorb heat of an exhaust gas exhausted from another boiler or another turbine may be provided, and the heating device may include a sixth heat exchanger that releases the heat from the heat medium supplied from the fifth heat exchanger to heat the exhaust gas after the exhaust gas is treated by the CO₂ recovery apparatus
The present invention also relates to exhaust gas treatment method including recovering, by a CO2 recovery apparatus, CO2 from an exhaust gas exhausted from a boiler or a turbine, and removing, by a VOC removal apparatus, a VOC from the exhaust gas after the exhaust gas is treated by the CO2 recovery apparatus, the exhaust treatment method characterized by comprising: heating, by a heating device, the exhaust gas after the exhaust gas is treated by the CO2recovery apparatus and before the exhaust gas is treated by the VOC removal apparatus; and cooling, by a cooling device, the exhaust gas after the exhaust gas is treated by the VOC removal apparatus, causing, by a first heat exchanger provided between the boiler or the turbine and the CO2 recovery apparatus, a heat of the exhaust gas to be absorbed in a heat medium, and releasing, by a second heat exchanger, the heat from the heat medium supplied from the first heat exchanger to heat the exhaust gas after the exhaust gas is treated by the CO2 recovery apparatus, wherein a heat of the exhaust gas after the exhaust gas is treated by the VOC removal apparatus is absorbed by a heat medium provided in a third heat exchanger, the exhaust gas after the exhaust gas is treated by the CO2recovery apparatus is heated by a fourth heat exchanger by the heat from the heat medium supplied from the third heat exchanger is released, the method further comprising the step of heating the exhaust gas after the exhaust gas is treated by the CO2 recovery apparatus by using the steam generated in the boiler.

### [Effects of the Invention]

In the exhaust gas treatment system and the exhaust gas treatment method described above, it is possible to heat the exhaust gas, for example, to a high temperature equal to or more than 200 to 300 °C before the exhaust gas is treated by the VOC removal apparatus by heating the exhaust gas having a low temperature to, for example, about 30 to 40 °C after the exhaust gas is treated by the CO₂ recovery apparatus, using the heating device such as the duct firing apparatus.

Thus, according to the exhaust gas treatment system described above, the exhaust gas having a low temperature after CO₂ is recovered by the CO₂ recovery apparatus can be heated to a high temperature that allows the VOC to be decomposed (or adsorbed) and removed using a catalyst, CO₂ can be recovered and removed in the CO₂ recovery apparatus from a large amount of exhaust gas generated in an electric power facility such as a thermal power plant, and the VOC can be reliably removed through a catalytic reaction of the VOC removal apparatus.

### [Brief Description of Drawings]

FIG. 1 is a diagram illustrating an exhaust gas treatment system and an exhaust gas treatment method according to a first embodiment.
FIG. 2 is a diagram illustrating an exhaust gas treatment system and an exhaust gas treatment method according to a second embodiment.
FIG. 3 is a diagram illustrating an exhaust gas treatment system and an exhaust gas treatment method according to the present invention.
FIG. 4 is a diagram illustrating an exhaust gas treatment system and an exhaust gas treatment method according to a fourth embodiment.
FIG. 5 is a diagram illustrating an exhaust gas treatment system and an exhaust gas treatment method according to a fifth embodiment.
FIG. 6 is a diagram illustrating an exhaust gas treatment system and an exhaust gas treatment method according to a sixth embodiment.
FIG. 7 is a diagram illustrating an exhaust gas treatment system and an exhaust gas treatment method according to a seventh embodiment.
FIG. 8 is a diagram illustrating an exhaust gas treatment system and an exhaust gas treatment method according to an eighth embodiment.
FIG. 9 is a diagram illustrating an exhaust gas treatment system and an exhaust gas treatment method according to a ninth embodiment.
FIG. 10 is a diagram illustrating an exhaust gas treatment system and an exhaust gas treatment method according to a tenth embodiment.
FIG. 11 is a diagram illustrating an exhaust gas treatment system and an exhaust gas treatment method according to an eleventh embodiment.
FIG. 12 is a diagram illustrating an exhaust gas treatment system and an exhaust gas treatment method according to a twelfth embodiment.
FIG. 13 is a diagram illustrating an exhaust gas treatment system and an exhaust gas treatment method according to a thirteenth embodiment.
FIG. 14 is a diagram illustrating a CO₂ recovery apparatus of a related art.

### [Modes for Carrying out the Invention]

### [First embodiment]

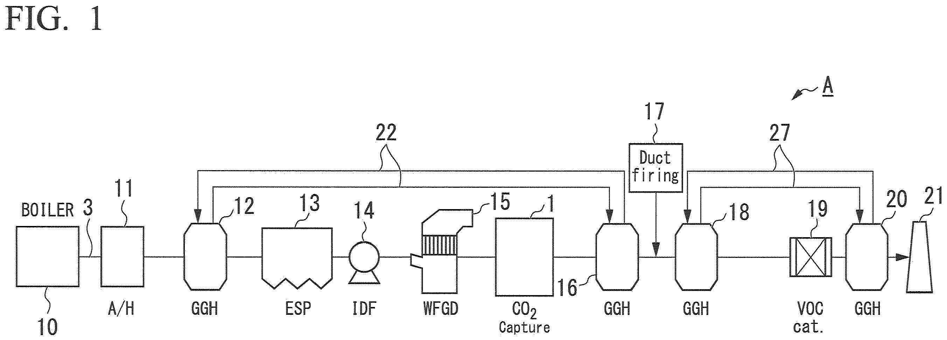

Hereinafter, an exhaust gas treatment system and an exhaust gas treatment method according to a first embodiment will be described with reference to FIG. 1. Here, the exhaust gas treatment system according to the present embodiment will be described as an exhaust gas treatment system for treating an exhaust gas exhausted from an electric power facility such as a thermal power plant.

As shown in FIG. 1, the electric power facility according to the exhaust gas treatment system A of the present embodiment includes a boiler 10 that burns a large amount of fossil fuel such as coal, oil, or LNG to generate steam for turning a turbine for power generation.

Further, the exhaust gas treatment system A of the present embodiment is intended to treat an exhaust gas 3 exhausted from the boiler 10, and includes an air heater (A/H) 11, a first heat exchanger (GGH) 12, an electrostatic precipitator (ESP) 13, a blower 14 such as an induced blower (IDF), a wet scrubber (WFGD) 15, a CO₂ recovery apparatus 1, a second heat exchanger (GGH) 16, a duct firing apparatus 17, a fourth heat exchanger (GGH) 18, a VOC removal apparatus 19, and a third heat exchanger (GGH) 20. Further, this exhaust gas treatment system A includes the above components from the air heater 11 to the third heat exchanger 20 in this order up to a point at which the exhaust gas 3 exhausted from the boiler 10 is released to the atmosphere through a chimney 21.

The air heater 11 is installed to recover heat from the exhaust gas of a boiler exit and preheat combustion air that burns fossil fuel in the boiler. Accordingly, the exhaust gas of 350 to 400 °C of the boiler exit (an economizer exit) is cooled to about 130 to 170 °C.

The first heat exchanger 12 performs heat exchange between a heat medium 22 and the exhaust gas 3 using the liquid heat medium 22. Further, the heat medium 22 of the first heat exchanger 12 circulates between the first heat exchanger 12 and the second heat exchanger 16, which performs heat exchange between the heat medium and the same exhaust gas 3 as well. The heat medium 22 having absorbed the heat of the exhaust gas 3 in the first heat exchanger 12 is supplied to the second heat exchanger 16, and the heat of the heat medium 22 is released to the exhaust gas 3 in the second heat exchanger 16. Further, in this case, an amount of heat absorption from the exhaust gas 3 by the first heat exchanger 12 is such a heat amount that dew condensation does not occur in the electrostatic precipitator 13 of a subsequent stage.

The electrostatic precipitator 13 is, for example, a precipitator to which static electric force is applied, and includes a discharge electrode and a dust collection plate. In this electrostatic precipitator 13, when a high voltage is applied to the discharge electrode, electrolysis occurs between the discharge electrode and the dust collection plate, and a gas around the discharge electrode is ionized. Further, when the exhaust gas flows between the discharge electrode and the dust collection plate where the gas ionized by the ionization exists, dust, mist (mist body or particulate matter (PM)) or the like in the exhaust gas 3 is charged with electricity and trapped on the dust collection plate by coulomb force. Accordingly, the mist body, the particulate matter (PM) or the like in the exhaust gas 3 is removed by the electrostatic precipitator 13.

The blower 14 such as an induced blower, when driven, causes the exhaust gas 3 to flow from the boiler 10 to the chimney 21 so that the exhaust gas is sequentially treated by the respective apparatuses.

The wet scrubber 15 introduces the exhaust gas 3 and sprays an absorption liquid containing washing water or an alkaline absorbent to bring the sprayed liquid into contact with the exhaust gas 3. Accordingly, particulate matter, sulfur oxide (SOx), nitrogen oxide (NOx) or the like in the exhaust gas 3 is adsorbed/absorbed into the sprayed liquid and removed from the exhaust gas 3. Further, the wet scrubber 15 cools the exhaust gas 3, thereby exhibits an effect of increasing recovery efficiency of CO₂ in the exhaust gas 3 and absorption efficiency by the CO₂ absorption liquid in the CO₂ recovery apparatus 1 of a subsequent stage.

The CO₂ recovery apparatus 1 is the same as that shown in FIG. 14 which includes an absorption tower 5 for bringing the exhaust gas 3 and the CO₂ absorption liquid 4 into contact with each other to remove CO₂ from the exhaust gas 3, and a regeneration tower 7 for receiving CO₂ absorption liquid 6 having absorbed CO₂ in the absorption tower 5 and separating and recovering CO₂ absorbed into the CO₂ absorption liquid 6.

As shown in FIG. 14, the absorption tower 5 causes the exhaust gas 3 that is introduced through a duct from the wet scrubber 15 to flow from a lower part to an upper part, and sprays the CO₂ absorption liquid 4 using the absorption liquid scrubber 23. Accordingly, the CO₂ absorption liquid 4 and the exhaust gas 3 come in contact with each other, and CO₂ in the exhaust gas 3 is dissolved in the CO₂ absorption liquid 4 and removed. Further, the CO₂ absorption liquid 6 having absorbed CO₂ is accumulated in the lower part of the absorption tower 5.

Further, for example, an amine-based absorption liquid may be adopted as the CO₂ absorption liquid 4. Specifically, an alkanolamine such as monoethanolamine, diethanolamine, triethanolamine, methyldiethanolamine, diisopropanolamine, or diglycolamine may be adopted as the CO₂ absorption liquid 4. Further, hindered amines may be adopted. Further, each independent water solution of the material or a water solution obtained by mixing two or more of the materials may be used as the CO₂ absorption liquid.

The regeneration tower 7 separates and recovers CO₂ from the CO₂ absorption liquid 6 having absorbed CO₂ in the absorption tower 5. In the regeneration tower 7, the CO₂ absorption liquid (rich liquid) 6 accumulated in the lower part of the absorption tower 5 is supplied from an upper part to the inside of the regeneration tower 7 by driving a liquid transportation pump 24. Further, high temperature steam is supplied to the regeneration tower 7 from a lower part to heat the dropped CO₂ absorption liquid 6, such that CO₂ is dissociated from the CO₂ absorption liquid 6 and desorbed. Further, desorbed CO₂ is led from the upper part of the regeneration tower 7 to the outside, cooled and recovered.

Meanwhile, the CO₂ absorption liquid (lean liquid) 4 from which CO₂ has been dissociated and removed is accumulated in the lower part of the regeneration tower 7, a return pump 25 is driven, and the CO₂ absorption liquid 4 is cooled by a cooler 26 and sent to the absorption tower 5. Further, the CO₂ absorption liquid 4 returned from the regeneration tower 7 is supplied from the absorption liquid scrubber 23 to the inside of absorption tower 5, absorbs CO₂ again and is accumulated in the lower part of the absorption tower 5. In other words, in the CO₂ recovery apparatus 1, the CO₂ absorption liquid 6 having absorbed CO₂ or the like is sent from the absorption tower 5 to the regeneration tower 7 through an absorption liquid transportation pipe, the CO₂ absorption liquid 4 from which CO₂ has been recovered in the regeneration tower 7 is returned from the regeneration tower 7 to the absorption tower 5 through the absorption liquid supply pipe again, circulating the CO₂ absorption liquids 4 and 6 between the absorption tower 5 and the regeneration tower 7.

Further, as shown in FIG. 1, the exhaust gas 3 from which CO₂ has been removed by the CO₂ recovery apparatus 1 passes through the second heat exchanger 16, which is heating device. The heat is released from the heat medium 22, which has absorbed the heat in the first heat exchanger 12 and has been sent to the second heat exchanger 16, to the exhaust gas 3 and the exhaust gas 3 is heated.

Further, the exhaust gas 3 heated by the second heat exchanger 16 and flowing toward the chimney 21 through a duct is further heated by the duct firing apparatus 17 that is heating device. The duct firing apparatus 17 includes a burner, and burns fuel such as natural gas to form a flame and heats the exhaust gas 3 flowing through the duct using the flame.

Further, the exhaust gas 3 heated by the duct firing apparatus 17 is further heated by the fourth heat exchanger 18 that is heating device. The heat medium 27 releasing the heat to the exhaust gas 3 in the fourth heat exchanger 18 circulates between the fourth heat exchanger 18 and the third heat exchanger 20 of a subsequent stage that performs heat exchange between the same exhaust gas 3 and the heat medium as well. Further, the heat medium 27 having absorbed the heat of the exhaust gas 3 by the third heat exchanger 20 that is cooling device is supplied to the fourth heat exchanger 18 and the heat of the heat medium 27 is released to the exhaust gas 3 in the fourth heat exchanger 18. The exhaust gas 3 before being treated by the VOC removal apparatus 19is further heated by the fourth heat exchanger 18.

The VOC removal apparatus 19 includes a noble metal such as platinum, cobalt, cerium or the like as a catalyst, and decomposes and/or adsorbs and removes a VOC (volatile organic compound) in the exhaust gas 3 through a catalytic reaction. The exhaust gas 3 from which the VOC has been removed by the VOC removal apparatus 19 in this way passes through the third heat exchanger 20. Further, the heat of the exhaust gas 3 is absorbed by the heat medium 27 and the exhaust gas 3 is released from the chimney 21 to the atmosphere in a state in which the exhaust gas 3 has been cooled to a predetermined temperature, as described above.

Further, in the exhaust gas treatment system A and the exhaust gas treatment method of the present embodiment, first, the duct firing apparatus 17 is included as heating device that heats the exhaust gas 3 after the exhaust gas 3 is treated by the CO₂ recovery apparatus 1 and before the exhaust gas 3 is treated by the VOC removal apparatus 19. Accordingly, the exhaust gas 3 cooled by the wet scrubber 15 in order to increase recovery efficiency of CO₂ in the CO₂ recovery apparatus 1 and having a low temperature after the exhaust gas 3 is treated by the CO₂ recovery apparatus 1 can be heated by the duct firing apparatus 17 to a high temperature equal to or more than 200 to 300 °C before the exhaust gas 3 is supplied to the VOC removal apparatus 19.

Thus, according to the exhaust gas treatment system A and the exhaust gas treatment method of the present embodiment, it is possible to recover CO₂ from the large amount of exhaust gas 3 generated from the electric power facility using the CO₂ recovery apparatus 1, and to heat the exhaust gas 3 having a low temperature after CO₂ has been recovered by the CO₂ recovery apparatus 1 to a high temperature that allows the VOC to be decomposed/adsorbed and removed using a catalyst.

Further, in the exhaust gas treatment system A and the exhaust gas treatment method of the present embodiment, the heat of the exhaust gas 3 can be absorbed by the first heat exchanger 12, and the heat medium 22 having absorbed this heat can be sent to the second heat exchanger 16 of the heating device to heat the exhaust gas 3 before the exhaust gas 3 is treated by the VOC removal apparatus 19. Accordingly, between the CO₂ recovery apparatus 1 and the VOC removal apparatus 19, the exhaust gas 3 can be heated by the second heat exchanger 16 to a temperature required for treatment in the VOC removal apparatus 19.

Further, in the exhaust gas treatment system A and the exhaust gas treatment method of the present embodiment, before the exhaust gas 3 is released from the chimney 21, the heat of the exhaust gas 3 can be absorbed into the heat medium 27 by the third heat exchanger 20 of the cooling device, and the heat medium 27 having absorbed the heat can be sent to the fourth heat exchanger 18 of the heating device to heat the exhaust gas 3 before the exhaust gas 3 is treated by the VOC removal apparatus 19. Accordingly, before the exhaust gas 3 is released from the chimney 21, the heat of the exhaust gas 3 can be recovered by the third heat exchanger 20 and the exhaust gas 3 can be heated by the fourth heat exchanger 18 to a temperature required for treatment in the VOC removal apparatus 19. Further, it is possible to reliably cool the exhaust gas 3 to a predetermined temperature or less by absorbing the heat of the exhaust gas 3 using the third heat exchanger 20 to cool the exhaust gas 3, and to release the exhaust gas 3 from the chimney 21 to the atmosphere.

Further, it is possible to heat the exhaust gas 3 to a temperature that allows the VOC to be reliably removed by the VOC removal apparatus 19 even when heating by the duct firing apparatus 17 is reduced since the heat of the exhaust gas 3 can be absorbed by the first heat exchanger 12 and the exhaust gas 3 can be heated by the second heat exchanger 16 before the exhaust gas 3 is treated by the VOC removal apparatus 19, and since the heat of the exhaust gas 3 can be absorbed by the third heat exchanger 20 and the exhaust gas 3 can be heated by the fourth heat exchanger 18 before the exhaust gas 3 is treated by the VOC removal apparatus 19. Accordingly, it is possible to reduce fuel such as natural gas required for heating the exhaust gas 3 in the duct firing apparatus 17 and to achieve reduction of running cost of the exhaust gas treatment system A. In other words, it is possible to efficiently and economically treat the exhaust gas 3 while conserving energy.

### [Second embodiment]

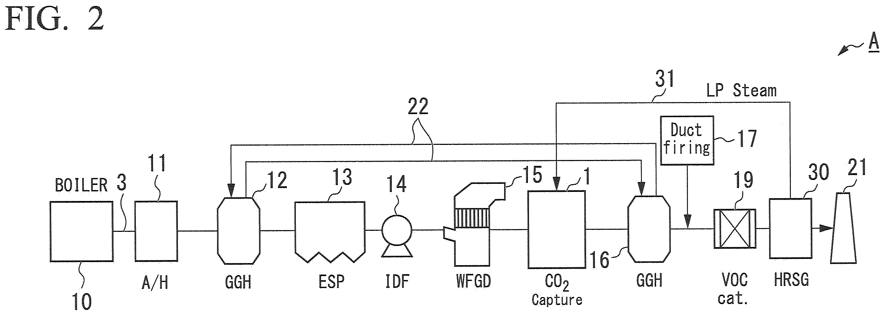

Next, an exhaust gas treatment system and an exhaust gas treatment method according to a second embodiment will be described with reference to FIG. 2. This embodiment relates to an exhaust gas treatment system for treating an exhaust gas exhausted from a boiler of an electric power facility such as a thermal power plant, similar to the exhaust gas treatment system of the first embodiment. Accordingly, the same components as those in the first embodiment are denoted by the same reference numerals and a detailed description thereof will be omitted.

As shown in FIG. 2, the electric power facility according to the exhaust gas treatment system A of the present embodiment includes a boiler 10 that burns a large amount of fossil fuel such as coal, oil, or LNG to generate steam for turning a turbine for power generation.

Further, the exhaust gas treatment system A of the present embodiment includes an air heater 11, a first heat exchanger 12, an electrostatic precipitator 13, a blower 14 such as an induced blower, a wet scrubber 15, a CO₂ recovery apparatus 1, a second heat exchanger 16, a duct firing apparatus 17, and a VOC removal apparatus 19.

Meanwhile, the exhaust gas treatment system A of the present embodiment includes a first exhaust heat recovery boiler (HRSG) 30 of cooling device between the VOC removal apparatus 19 and a chimney 21, instead of the fourth heat exchanger 18 and the third heat exchanger 20, unlike the first embodiment.

Further, the exhaust gas treatment system A (and the exhaust gas treatment method) of the present embodiment includes the duct firing apparatus 17 as heating device that heats the exhaust gas 3 after the exhaust gas 3 is treated by the CO₂ recovery apparatus 1 and before the exhaust gas 3 is treated by the VOC removal apparatus 19, similar to the first embodiment. Accordingly, the exhaust gas 3 cooled by the wet scrubber 15 in order to increase CO₂ recovery efficiency in the CO₂ recovery apparatus 1 and having a lower temperature after the exhaust gas 3 is treated by the CO₂ recovery apparatus 1 can be heated by the duct firing apparatus 17 to a high temperature before the exhaust gas 3 is supplied to the VOC removal apparatus 19.

Thus, according to the exhaust gas treatment system A and the exhaust gas treatment method of the present embodiment, it is possible to recover CO₂ from a large amount of exhaust gas 3 generated from the electric power facility using the CO₂ recovery apparatus 1 and to heat the exhaust gas 3 having a low temperature after CO₂ has been recovered by the CO₂ recovery apparatus 1 to a temperature that allows the VOC to be decomposed/adsorbed and removed using a catalyst.

Further, in the exhaust gas treatment system A and the exhaust gas treatment method of the present embodiment, the heat of the exhaust gas 3 can be absorbed by the first heat exchanger 12, and the heat medium 22 having absorbed this heat can be sent to the second heat exchanger 16 of the heating device to heat the exhaust gas 3 before the exhaust gas 3 is treated by the VOC removal apparatus 19, similar to the first embodiment. Accordingly, between the CO₂ recovery apparatus 1 and the VOC removal apparatus 19, the exhaust gas 3 can be heated by the second heat exchanger 16 to a temperature required for treatment in the VOC removal apparatus 19. Further, the exhaust gas 3 can be heated to a temperature that allows the VOC to be reliably removed by the VOC removal apparatus 19 even when heating by the duct firing apparatus 17 is reduced since the heat of the exhaust gas 3 can be absorbed by the first heat exchanger 12 and the exhaust gas 3 can be heated by the second heat exchanger 16 before the exhaust gas 3 is treated by the VOC removal apparatus 19. Accordingly, it is possible to reduce fuel such as natural gas required for heating the exhaust gas 3 in the duct firing apparatus 17 and to achieve reduction of running cost of the exhaust gas treatment system A.

On the other hand, the exhaust gas 3 which is heated to a high temperature by the heating device of the duct firing apparatus 17 and the second heat exchanger 16 and from which the VOC has been decomposed/adsorbed and removed by the VOC removal apparatus 19 is sent to the first exhaust heat recovery boiler 30 of the cooling device. Further, steam 31 is generated by the first exhaust heat recovery boiler 30 using the heat of the high temperature exhaust gas 3.

Further, in the exhaust gas treatment system A and the exhaust gas treatment method of the present embodiment, the steam 31 generated by the first exhaust heat recovery boiler 30 is sent to the regeneration tower 7 of the CO₂ recovery apparatus 1 and the CO₂ absorption liquid 6 is heated using the steam 31. Accordingly, it is possible to generate the steam 31 using the heat recovered from the exhaust gas 3 by the first exhaust heat recovery boiler 30 and to recover CO₂ from the exhaust gas 3 using the steam 31 in the CO₂ recovery apparatus 1. Thus, it is unnecessary to separately generate the steam using the boiler 10 or it is possible to reduce a consumption amount of the steam, and to achieve reduction of running cost of the exhaust gas treatment system A while removing CO₂ and the VOC from the exhaust gas 3.

Further, it is possible to cool the high temperature exhaust gas 3 after being treated by the VOC removal apparatus 19 by generating the steam 31 using the first exhaust heat recovery boiler 30. Accordingly, it is possible to reliably cool the exhaust gas 3 to a low predetermined temperature or less and then release the exhaust gas 3 from the chimney 21 to the atmosphere.

### [Third embodiment]

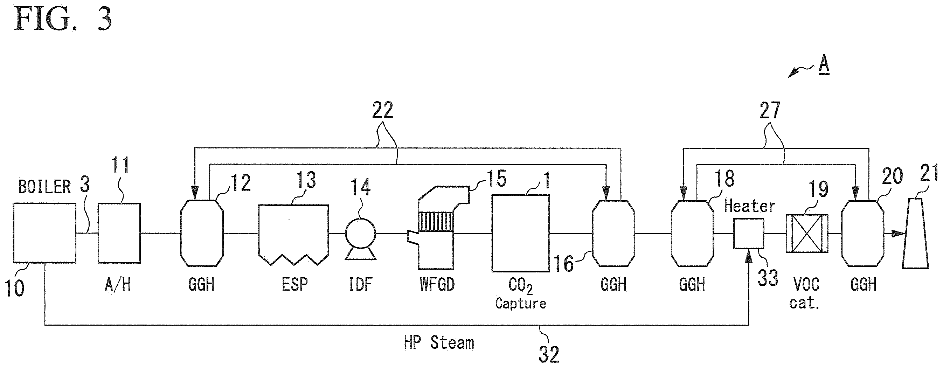

Next, an exhaust gas treatment system and an exhaust gas treatment method according to a third embodiment covered by the independent claims of the present invention will be described with reference to FIG. 3. This embodiment relates to an exhaust gas treatment system for treating an exhaust gas exhausted from a boiler of an electric power facility such as a thermal power plant, similar to the exhaust gas treatment systems of the first embodiment and the second embodiment. Accordingly, the same components as those in the first and second embodiments are denoted by the same reference numerals and a detailed description thereof will be omitted.

As shown in FIG. 3, the electric power facility according to an exhaust gas treatment system A of the present embodiment includes a boiler 10 that burns a large amount of fossil fuel such as coal, oil, or LNG to generate steam for turning a turbine for power generation.

Further, the exhaust gas treatment system A of the present embodiment includes an air heater 11, a first heat exchanger 12, an electrostatic precipitator 13, a blower 14 such as an induced blower, a wet scrubber 15, a CO₂ recovery apparatus 1, a second heat exchanger 16, a fourth heat exchanger 18, a VOC removal apparatus 19, and a third heat exchanger 20, similar to the first embodiment.

Meanwhile, the exhaust gas treatment system A of the present embodiment includes a steam heating apparatus 33 of heating device that heats an exhaust gas 3 using steam 32 before the exhaust gas 3 is treated by the VOC removal apparatus 19 between the fourth heat exchanger 18 of the heating device and the VOC removal apparatus 19 instead of including the duct firing apparatus 17, unlike the first embodiment and the second embodiment. Further, the high pressure and high temperature steam 32 generated by the boiler 10 is sent to this steam heating apparatus 33 and the exhaust gas 3 is heated using the steam 32 of the boiler 10.

Further, in the exhaust gas treatment system A and the exhaust gas treatment method of the present embodiment, the exhaust gas 3 having a low temperature after being treated by the CO₂ recovery apparatus 1 is heated to a high temperature by the steam heating apparatus 33 using the high temperature steam 32 before the exhaust gas 3 is supplied to the VOC removal apparatus 19.

Thus, according to the exhaust gas treatment system A and the exhaust gas treatment method of the present embodiment, it is possible to recover CO₂ from the large amount of exhaust gas 3 generated from an electric power facility using the CO₂ recovery apparatus 1, and to heat the exhaust gas 3 having a low temperature after CO₂ is recovered by the CO₂ recovery apparatus 1 to a high temperature that allows the VOC to be decomposed/adsorbed and removed using a catalyst.

Further, in the exhaust gas treatment system A and the exhaust gas treatment method of the present embodiment, the heat of the exhaust gas 3 can be absorbed by the first heat exchanger 12 and a heat medium 22 having absorbed this heat can be sent to the second heat exchanger 16 of the heating device to heat the exhaust gas 3 before the exhaust gas 3 is treated by the VOC removal apparatus 19, similar to the first embodiment. Thus, between the CO₂ recovery apparatus 1 and the VOC removal apparatus 19, the exhaust gas 3 can be heated by the second heat exchanger 16 to a high temperature required for treatment in the VOC removal apparatus 19.

Further, in the exhaust gas treatment system A and the exhaust gas treatment method of the present embodiment, before the exhaust gas 3 is released from the chimney 21, the heat of the exhaust gas 3 can be absorbed into the heat medium 27 by the third heat exchanger 20 of the cooling device, and the heat medium 27 having absorbed the heat can be sent to the fourth heat exchanger 18 of the heating device to heat the exhaust gas 3 before the exhaust gas 3 is treated by the VOC removal apparatus 19. Accordingly, it is possible to recover the heat of the exhaust gas 3 using the third heat exchanger 20 and to heat the exhaust gas 3 to a high temperature required for treatment in the VOC removal apparatus 19 using the fourth heat exchanger 18 before the exhaust gas 3 is released from the chimney 21. Further, it is possible to reliably cool the exhaust gas 3 to a low predetermined temperature or less by absorbing the heat of the exhaust gas 3 using the third heat exchanger 20 to cool the exhaust gas 3, and to release the exhaust gas 3 from the chimney 21 to the atmosphere.

Further, it is possible to heat the exhaust gas 3 to a high temperature that allows the VOC to be reliably removed by the VOC removal apparatus 19 even when heating by the steam heating apparatus 33 is reduced since the heat of the exhaust gas 3 can be absorbed by the first heat exchanger 12 and the exhaust gas 3 can be heated by the second heat exchanger 16 before the exhaust gas 3 is treated by the VOC removal apparatus 19, and since the heat of the exhaust gas 3 can be absorbed by the third heat exchanger 20 and the exhaust gas 3 can be heated by the fourth heat exchanger 18 before the exhaust gas 3 is treated by the VOC removal apparatus 19. That is to say, it is possible to reduce an amount of the steam 32, which is generated in the boiler 10, used by the steam heating apparatus 33 and, as a result, to reduce fuel consumed in the boiler 10, and to achieve reduction of running cost of the exhaust gas treatment system A.

### [Fourth embodiment]

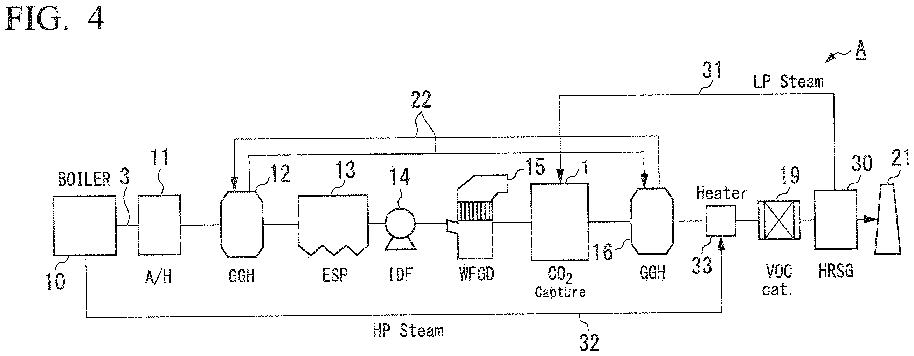

Next, an exhaust gas treatment system and an exhaust gas treatment method according to a fourth embodiment will be described with reference to FIG. 4. This embodiment relates to an exhaust gas treatment system for treating an exhaust gas exhausted from a boiler of an electric power facility such as a thermal power plant, similar to the exhaust gas treatment systems of the first to third embodiments. Accordingly, the same components as those in the first to third embodiments are denoted by the same reference numerals and a detailed description thereof will be omitted.

The electric power facility according to an exhaust gas treatment system A of the present embodiment includes a boiler 10 that burns a large amount of fossil fuel such as coal, oil or LNG to generate steam for turning a turbine for power generation, as shown in FIG. 4.

Further, the exhaust gas treatment system A of the present embodiment includes an air heater 11, a first heat exchanger 12, an electrostatic precipitator 13, a blower 14 such as an induced blower, a wet scrubber 15, a CO₂ recovery apparatus 1, a second heat exchanger 16, and a VOC removal apparatus 19.

Further, in the exhaust gas treatment system A of the present embodiment, a first exhaust heat recovery boiler 30 of cooling device is included between the VOC removal apparatus 19 and a chimney 21. Further, a steam heating apparatus 33 that heats an exhaust gas 3 using steam 32 before the exhaust gas 3 is treated by the VOC removal apparatus 19 is included between the second heat exchanger 16 and the VOC removal apparatus 19. High pressure and high temperature steam 32 is sent from the boiler 10 to the steam heating apparatus 33, and the exhaust gas 3 is heated using the steam 32 of this boiler 10.

Further, in the exhaust gas treatment system A and the exhaust gas treatment method of the present embodiment, the exhaust gas 3 having a low temperature after being treated by the CO₂ recovery apparatus 1 can be heated to a high temperature using high temperature steam 32 by the steam heating apparatus 33 before the exhaust gas 3 is supplied to the VOC removal apparatus 19.

Thus, according to the exhaust gas treatment system A and the exhaust gas treatment method of the present embodiment, it is possible to recover CO₂ from a large amount of exhaust gas 3 generated from the electric power facility using the CO₂ recovery apparatus 1, and to heat the exhaust gas 3 having a low temperature after CO₂ is recovered by the CO₂ recovery apparatus 1 to a high temperature that allows the VOC to be decomposed/adsorbed and removed using a catalyst.

Further, in the exhaust gas treatment system A and the exhaust gas treatment method of the present embodiment, a heat medium 27 absorbing the heat of the exhaust gas 3 by the first heat exchanger 12 can be sent to the second heat exchanger 16 of the heating device, and the exhaust gas 3 can be heated before the exhaust gas 3 is treated by the VOC removal apparatus 19, similar to the first embodiment. Accordingly, between the CO₂ recovery apparatus 1 and the VOC removal apparatus 19, the exhaust gas 3 can be heated by the second heat exchanger 16 to a high temperature required for treatment in the VOC removal apparatus 19.

Further, the exhaust gas 3 can be heated to a high temperature that allows the VOC to be reliably removed by the VOC removal apparatus 19 even when heating by the steam heating apparatus 33 is reduced since the heat of the exhaust gas 3 can be absorbed by the first heat exchanger 12 and the exhaust gas 3 can be heated by the second heat exchanger 16 before the exhaust gas 3 is treated by the VOC removal apparatus 19. That is to say, it is possible to reduce an amount of the steam 32, which is generated by the boiler 10, used in the steam heating apparatus 33, to reduce the fuel consumed by the boiler 10, and to reduce running cost of the exhaust gas treatment system A.

Further, the exhaust gas 3 that has been heated to a high temperature by the heating device of the second heat exchanger 16 and the steam heating apparatus 33 and from which the VOC has been decomposed/adsorbed and removed by the VOC removal apparatus 19 is sent to the first exhaust heat recovery boiler 30 of the cooling device, similar to the second embodiment. Further, steam 31 is generated by the first exhaust heat recovery boiler 30 using the heat of the high temperature exhaust gas 3.

In the exhaust gas treatment system A and the exhaust gas treatment method of the present embodiment, the steam 31 generated in the first exhaust heat recovery boiler 30 in this way is sent to the regeneration tower 7 of the CO₂ recovery apparatus 1, and the CO₂ absorption liquid 6 is heated using this steam 31. Accordingly, the steam 31 can be generated using the heat recovered from the exhaust gas 3 by the first exhaust heat recovery boiler 30, and CO₂ can be recovered from the exhaust gas 3 using this steam 31 in the CO₂ recovery apparatus 1. Thus, it is unnecessary to separately generate steam in the boiler 10 or it is possible to reduce a consumption amount of the steam, and to reduce running cost of the exhaust gas treatment system A while removing CO₂ and the VOC from the exhaust gas 3.

Further, it is possible to cool the exhaust gas 3 having a high temperature after being treated by the VOC removal apparatus 19 by generating the steam 31 in the first exhaust heat recovery boiler 30. Accordingly, it is possible to reliably cool the exhaust gas 3 to a low predetermined temperature or less and release the exhaust gas 3 from the chimney 21 to the atmosphere.

### [Fifth embodiment]

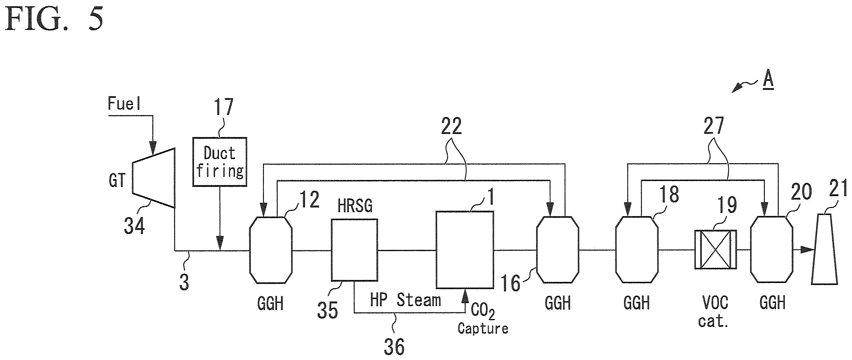

Next, an exhaust gas treatment system and an exhaust gas treatment method according to a fifth embodiment will be described with reference to FIG. 5. This embodiment relates to an exhaust gas treatment system for treating an exhaust gas exhausted from a gas turbine of an electric power facility rather than a boiler as those in the first to fourth embodiments. However, the same components as those in the first to fourth embodiments are denoted by the same reference numerals and a detailed description thereof will be omitted.

The electric power facility according to an exhaust gas treatment system A of the present embodiment includes a gas turbine 34 for power generation that is driven by burning fossil fuel such as oil or LNG, as shown in FIG. 5.

Further, the exhaust gas treatment system A of the present embodiment includes a duct firing apparatus 17, a first heat exchanger 12, a second exhaust heat recovery boiler 35, a CO₂ recovery apparatus 1, a second heat exchanger 16, a fourth heat exchanger 18, a VOC removal apparatus 19 and a third heat exchanger 20. Further, the exhaust gas treatment system A of the present embodiment includes the above components from the duct firing apparatus 17 to the third heat exchanger 20 in this order up to a point at which the exhaust gas 3 exhausted from the gas turbine 34 is released to the atmosphere thorough the chimney 21.

In the exhaust gas treatment system A and the exhaust gas treatment method of the present embodiment, a high temperature exhaust gas 3 exhausted from the gas turbine 34 is further heated to a high temperature by the duct firing apparatus 17. The exhaust gas 3 heated in this way passes through the first heat exchanger 12, and heat of the exhaust gas 3 is absorbed into a heat medium 22 by the first heat exchanger 12. Further, the heat medium 22 having absorbed the heat from the exhaust gas 3 in the first heat exchanger 12 is supplied to the second heat exchanger 16 disposed in a subsequent stage of the CO₂ recovery apparatus 1 and is circulated. Accordingly, the heat absorbed from the exhaust gas 3 in the first heat exchanger 12 is released from the heat medium 22 to the exhaust gas 3 in the second heat exchanger 16 of the heating device, and the exhaust gas 3 is heated after the exhaust gas 3 is treated by the CO₂ recovery apparatus 1 and before the exhaust gas 3 is treated by the VOC removal apparatus 19.

Further, the exhaust gas 3 from which the heat has been released while passing through the first heat exchanger 12 is still in a high temperature state, and this exhaust gas 3 is sent to the second exhaust heat recovery boiler 35 to generate steam 36. Accordingly, the exhaust gas 3 can be cooled, for example, to a low temperature of about 30 to 40 °C and sent to the CO₂ recovery apparatus 1, and CO₂ can be efficiently recovered by the CO₂ recovery apparatus 1 from the large amount of exhaust gas 3 generated from the gas turbine 34 of the electric power facility.

Further, in this case, the steam 36 generated by the second exhaust heat recovery boiler 35 is sent to a regeneration tower 7 of the CO₂ recovery apparatus 1, and the CO₂ absorption liquid 6 is heated using this steam 36. Accordingly, the steam 36 can be generated using the heat recovered from the exhaust gas 3 by the second exhaust heat recovery boiler 35 and CO₂ can be recovered from the exhaust gas 3 by the CO₂ recovery apparatus 1 using this steam 36.

Further, the exhaust gas 3 having a low temperature after CO₂ has been recovered by the CO₂ recovery apparatus 1 passes through the second heat exchanger 16 and is heated. Further, the heat absorbed by the third heat exchanger 20 provided between the VOC removal apparatus 19 and the chimney 21 is sent to the fourth heat exchanger 18 of the heating device through the heat medium 27, and the exhaust gas 3 is further heated by the fourth heat exchanger 18 before the exhaust gas 3 is treated by the VOC removal apparatus 19.

Accordingly, in the exhaust gas treatment system A and the exhaust gas treatment method of the present embodiment, the heat of the exhaust gas 3 can be absorbed by the first heat exchanger 12, and a heat medium 22 having absorbed this heat can be sent to the second heat exchanger 16 of the heating device to heat the exhaust gas 3 before the exhaust gas 3 is treated by the VOC removal apparatus 19. Further, before the exhaust gas 3 is released from the chimney 21, the heat of the exhaust gas 3 can be recovered in the third heat exchanger 20, and the exhaust gas 3 can be heated by the fourth heat exchanger 18 to a high temperature required for treatment in the VOC removal apparatus 19. Further, it is possible to reliably cool the exhaust gas 3 to a low predetermined temperature or less by absorbing the heat of the exhaust gas 3 using the third heat exchanger 20 to cool the exhaust gas 3, and to release the exhaust gas 3 from the chimney 21 to the atmosphere.

Further, it is possible to heat the exhaust gas 3 to a high temperature that allows the VOC to be reliably removed by the VOC removal apparatus 19 since the heat of the exhaust gas 3 can be absorbed by the first heat exchanger 12 and the exhaust gas 3 can be heated by the second heat exchanger 16 before the exhaust gas 3 is treated by the VOC removal apparatus 19, and since the heat of the exhaust gas 3 can be absorbed by the third heat exchanger 20 and the exhaust gas 3 can be heated by the fourth heat exchanger 18 before the exhaust gas 3 is treated by the VOC removal apparatus 19.

Thus, according to the exhaust gas treatment system A and the exhaust gas treatment method of the present embodiment, it is possible to recover CO₂ from a large amount of exhaust gas 3 generated from an electric power facility with the CO₂ recovery apparatus 1 and to heat the exhaust gas 3 having a low temperature after CO₂ is recovered by the CO₂ recovery apparatus 1 to a high temperature that allows the VOC to be decomposed/adsorbed and removed using a catalyst.

Further, before the steam 36 generated by the second exhaust heat recovery boiler 35 is supplied to the CO₂ recovery apparatus 1, the steam 36 generated by the second exhaust heat recovery boiler 35 is sent to the regeneration tower 7 of the CO₂ recovery apparatus 1 and the CO₂ absorption liquid 6 is heated using this steam 36. Accordingly, the steam 36 can be generated by the second exhaust heat recovery boiler 35 using the heat recovered from the exhaust gas 3 and CO₂ can be recovered from the exhaust gas 3 by the CO₂ recovery apparatus 1 using this steam 36. Thus, it is unnecessary to separately generate steam in an auxiliary boiler or the like in the CO₂ recovery apparatus 1 or it is possible to reduce a consumption amount of the steam, to reduce running cost while reliably removing CO₂ and the VOC from the exhaust gas 3.

### [Sixth embodiment]

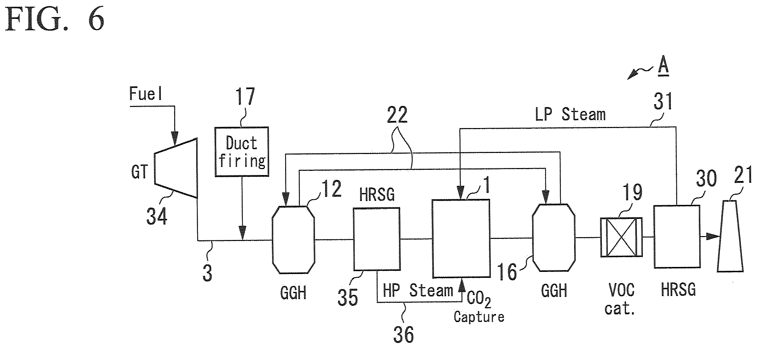

Next, an exhaust gas treatment system and an exhaust gas treatment method according to a sixth embodiment will be described with reference to FIG. 6. This embodiment relates to an exhaust gas treatment system for treating an exhaust gas exhausted from a gas turbine of an electric power facility, similar to the fifth embodiment. Accordingly, the same components as those in the first to fourth embodiment and in the fifth embodiment are denoted by the same reference numerals and a detailed description thereof will be omitted.

The electric power facility according to an exhaust gas treatment system A of the present embodiment includes a gas turbine 34 for power generation that is driven by burning fossil fuel such as oil or LNG, as shown in FIG. 6.

Further, the exhaust gas treatment system A of the present embodiment includes a duct firing apparatus 17, a first heat exchanger 12, a second exhaust heat recovery boiler 35, a CO₂ recovery apparatus 1, a second heat exchanger 16, and a VOC removal apparatus 19.

Meanwhile, the exhaust gas treatment system A of the present embodiment includes a first exhaust heat recovery boiler 30 between the VOC removal apparatus 19 and the chimney 21, without including the fourth heat exchanger 18 and the third heat exchanger 20, unlike the fifth embodiment.

Further, in the exhaust gas treatment system A and the exhaust gas treatment method of the present embodiment, high temperature exhaust gas 3 exhausted from the gas turbine 34 is further heated to a high temperature by the duct firing apparatus 17, similar to the fifth embodiment. The exhaust gas 3 heated in this way passes through the first heat exchanger 12, and the heat of the exhaust gas 3 is absorbed into the heat medium 22 by the first heat exchanger 12. The heat medium 22 having absorbed the heat from the exhaust gas 3 in the first heat exchanger 12 is supplied to the second heat exchanger 16 disposed in a subsequent stage of the CO₂ recovery apparatus 1 and circulated. Accordingly, the heat absorbed from the exhaust gas 3 in the first heat exchanger 12 is released from the heat medium 22 to the exhaust gas 3 by the second heat exchanger 16 of the heating device, and the exhaust gas 3 is heated after the exhaust gas 3 is treated by the CO₂ recovery apparatus 1 and before the exhaust gas 3 is treated by the VOC removal apparatus 19.

Further, the exhaust gas 3 having released the heat while passing through the first heat exchanger 12 is still in a high temperature state, and this exhaust gas 3 is sent to the second exhaust heat recovery boiler 35 to generate steam 36. Accordingly, the exhaust gas 3 can be cooled and sent to the CO₂ recovery apparatus 1, and CO₂ can be efficiently recovered in the CO₂ recovery apparatus 1 from the large amount of exhaust gas 3 generated from the gas turbine 34 of the electric power facility.

Further, in this case, the steam 36 generated in the second exhaust heat recovery boiler 35 is sent to a regeneration tower 7 of the CO₂ recovery apparatus 1 and the CO₂ absorption liquid 6 is heated using this steam 36. Accordingly, steam 36 can be generated using the heat recovered from the exhaust gas 3 by the second exhaust heat recovery boiler 35 and CO₂ can be recovered from the exhaust gas 3 using this steam 36 in the CO₂ recovery apparatus 1.

Further, the exhaust gas 3 having a low temperature after CO₂ has been recovered by the CO₂ recovery apparatus 1 is heated while passing through the second heat exchanger 16, and the exhaust gas 3 is heated to a high temperature required for treatment in the VOC removal apparatus 19.

Accordingly, in the exhaust gas treatment system A and the exhaust gas treatment method of the present embodiment, the heat of the exhaust gas 3 can be absorbed by the first heat exchanger 12, a heat medium 22 having absorbed this heat can be sent to the second heat exchanger 16 of the heating device, and the exhaust gas 3 can be heated before the exhaust gas 3 is treated by the VOC removal apparatus 19. Accordingly, the exhaust gas 3 can be heated to a high temperature that allows the VOC to be reliably removed by the VOC removal apparatus 19.

Thus, according to the exhaust gas treatment system A and the exhaust gas treatment method of the present embodiment, it is possible to recover CO₂ from a large amount of exhaust gas 3 generated from the electric power facility using the CO₂ recovery apparatus 1, and to heat the exhaust gas 3 having a low temperature after CO₂ is recovered by the CO₂ recovery apparatus 1 to a high temperature that allows the VOC to be decomposed/adsorbed and removed using a catalyst.

Further, the exhaust gas 3 having released the heat while passing through the first heat exchanger 12 is still in a high temperature state, and this exhaust gas 3 is sent to the second exhaust heat recovery boiler 35 to generate steam 36. Accordingly, the exhaust gas 3 can be cooled and sent to the CO₂ recovery apparatus 1, and CO₂ can be efficiently recovered by the CO₂ recovery apparatus 1 from the large amount of exhaust gas 3 generated from the gas turbine 34 of the electric power facility.

Further, in this case, the steam 36 generated by the second exhaust heat recovery boiler 35 is sent to a regeneration tower 7 of the CO₂ recovery apparatus 1 and the CO₂ absorption liquid 6 is heated using this steam 36. The steam 36 can be generated using the heat recovered from the exhaust gas 3 by the second exhaust heat recovery boiler 35, and CO₂ can be recovered from the exhaust gas 3 using this steam 36 in the CO₂ recovery apparatus 1.

Further, in the exhaust gas treatment system A and the exhaust gas treatment method of the present embodiment, the exhaust gas 3 which is heated to a high temperature by the heating device of the second heat exchanger 16 and from which the VOC is decomposed/adsorbed and removed by the VOC removal apparatus 19 is sent to the first exhaust heat recovery boiler 30 of the cooling device. Further, steam 31 is generated by the first exhaust heat recovery boiler 30 using the heat of the high temperature exhaust gas 3. The steam 31 generated by the first exhaust heat recovery boiler 30 in this way is sent to the regeneration tower 7 of the CO₂ recovery apparatus 1, and the CO₂ absorption liquid 6 is heated using this steam 31. Accordingly, the steam 31 can be generated using the heat recovered from the exhaust gas 3 by the first exhaust heat recovery boiler 30, and CO₂ can be recovered from the exhaust gas 3 using this steam 31 in the CO₂ recovery apparatus 1.

Thus, it is unnecessary to separately generate steam in an auxiliary boiler or the like in the CO₂ recovery apparatus 1 or it is possible to reduce a consumption amount of the steam, and to achieve reduction of running cost of the exhaust gas treatment system A while removing CO₂ and the VOC from the exhaust gas 3.

### [Seventh embodiment]

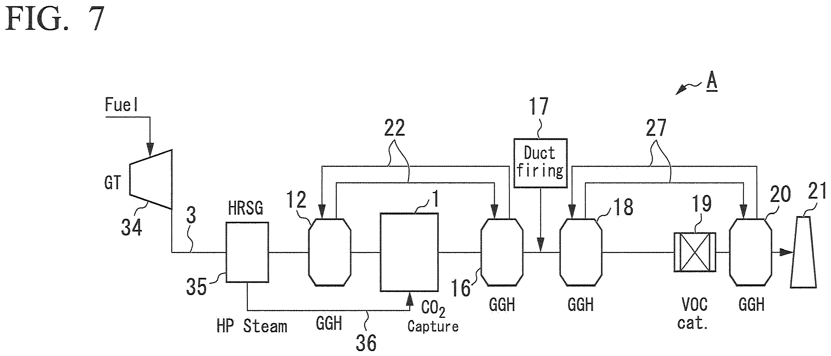

Next, an exhaust gas treatment system and an exhaust gas treatment method according to a seventh embodiment will be described with reference to FIG. 7. This embodiment relates to an exhaust gas treatment system for treating an exhaust gas exhausted from a gas turbine of an electric power facility, similar to the fifth embodiment and the sixth embodiment. Accordingly, the same components as those in the fifth and sixth embodiments are denoted by the same reference numerals and a detailed description thereof will be omitted.

The electric power facility according to an exhaust gas treatment system A of the present embodiment includes a gas turbine 34 for power generation that is driven by burning fossil fuel such as oil or LNG, as shown in FIG. 7.

Further, the exhaust gas treatment system A of the present embodiment includes a second exhaust heat recovery boiler 35, a first heat exchanger 12, a CO₂ recovery apparatus 1, a second heat exchanger 16, a duct firing apparatus 17, a fourth heat exchanger 18, a VOC removal apparatus 19, and a third heat exchanger 20.

Further, in the exhaust gas treatment system A and the exhaust gas treatment method of the present embodiment, the exhaust gas 3 from the gas turbine 34 is sent to the second exhaust heat recovery boiler 35 and steam 36 is generated. Further, the exhaust gas 3 cooled to a low temperature by the second exhaust heat recovery boiler 35 passes through the first heat exchanger 12, and the heat of the exhaust gas 3 is absorbed by the first heat exchanger 12. Accordingly, the exhaust gas 3 is cooled to a low temperature and sent to the CO₂ recovery apparatus 1. With the CO₂ recovery apparatus 1, it is possible to efficiently recover CO₂ from the large amount of exhaust gas 3 generated from the gas turbine 34 of the electric power facility.

Further, in this case, the steam 36 generated by the second exhaust heat recovery boiler 35 is sent to a regeneration tower 7 of the CO₂ recovery apparatus 1 to heat the CO₂ absorption liquid 6. Accordingly, CO₂ can be recovered from the exhaust gas 3 by the CO₂ recovery apparatus 1 using the steam 36 generated by the heat recovered from the exhaust gas 3 by the second exhaust heat recovery boiler 35.

Further, the exhaust gas 3 having a low temperature after CO₂ has been recovered by the CO₂ recovery apparatus 1 passes through the second heat exchanger 16, the heat absorbed by the first heat exchanger 12 is released by the second heat exchanger 16, and the exhaust gas 3 passing through the CO₂ recovery apparatus 1 is heated. Further, the exhaust gas 3 is further heated to a high temperature by the duct firing apparatus 17. Further, the heat of the exhaust gas 3 is absorbed by the third heat exchanger 20 before the exhaust gas 3 is released from the chimney 21, the heat medium 27 having absorbing this heat is sent to the fourth heat exchanger 18, and the exhaust gas 3 is further heated by the fourth heat exchanger 18 before the exhaust gas 3 is treated by the VOC removal apparatus 19.

Thus, the exhaust gas 3 having a low temperature after being treated by the CO₂ recovery apparatus 1 is heated to a high temperature equal to or more than 200 to 300 °C before the exhaust gas 3 is supplied to the VOC removal apparatus 19, and VOC of the exhaust gas 3 can be reliably removed and reduced through a catalytic reaction of the VOC removal apparatus 19.

Accordingly, in the exhaust gas treatment system A and the exhaust gas treatment method of the present embodiment, the exhaust gas 3 cooled to a low temperature in order to efficiently recover CO₂ in the CO₂ recovery apparatus 1 can be heated to a high temperature that allows the VOC to be decomposed/adsorbed and removed using a catalyst, by the heating device of the second heat exchanger 16, the duct firing apparatus 17, and the fourth heat exchanger 18. Thereby, CO₂ can be removed from the large amount of exhaust gas 3 generated from the gas turbine 34 of the electric power facility, and VOC can be removed by decomposing/adsorbing VOC using a catalyst.

Further, the steam 36 generated by the second exhaust heat recovery boiler 35 is sent to a regeneration tower 7 of the CO₂ recovery apparatus 1 before the steam is supplied to the CO₂ recovery apparatus 1 to heat the CO₂ absorption liquid 6. Accordingly, CO₂ can be recovered from the exhaust gas 3 using the steam 36 generated by the heat recovered from the exhaust gas 3 by the second exhaust heat recovery boiler 35, in the CO₂ recovery apparatus 1. Thus, it is unnecessary to separately generate steam in an auxiliary boiler or the like in the CO₂ recovery apparatus 1, or it is possible to reduce a consumption amount of the steam, to reduce running cost of the exhaust gas treatment system A while reliably removing CO₂ and the VOC from the exhaust gas 3.

Further, in the exhaust gas treatment system A and the exhaust gas treatment method of the present embodiment, the exhaust gas 3 having a low temperature after being treated by the CO₂ recovery apparatus 1 can be heated to a high temperature by the duct firing apparatus 17 before the exhaust gas is supplied to the VOC removal apparatus 19.

Accordingly, with the CO₂ recovery apparatus 1, it is possible to recover CO₂ from the large amount of exhaust gas 3 generated from the electric power facility. It is possible to heat the exhaust gas 3 having a low temperature after CO₂ is recovered by the CO₂ recovery apparatus 1 to a high temperature that allows the VOC to be decomposed/adsorbed and removed using a catalyst, and to reliably remove and reduce VOC through a catalytic reaction of the VOC removal apparatus 19.

Further, it is possible to heat the exhaust gas 3 to a high optimal temperature while reducing heating by the duct firing apparatus 17 since the heat of the exhaust gas 3 can be absorbed by the first heat exchanger 12 and the exhaust gas 3 can be heated by the second heat exchanger 16 before the exhaust gas 3 is supplied to the VOC removal apparatus 19, and since the heat of the exhaust gas 3 can be absorbed by the third heat exchanger 20 and the exhaust gas 3 can be heated by the fourth heat exchanger 18 before the exhaust gas is supplied to the VOC removal apparatus 19. Thus, it is possible to reduce fuel such as natural gas required for heating the exhaust gas 3 by the duct firing apparatus 17 and to reduce running cost.

### [Eighth embodiment]

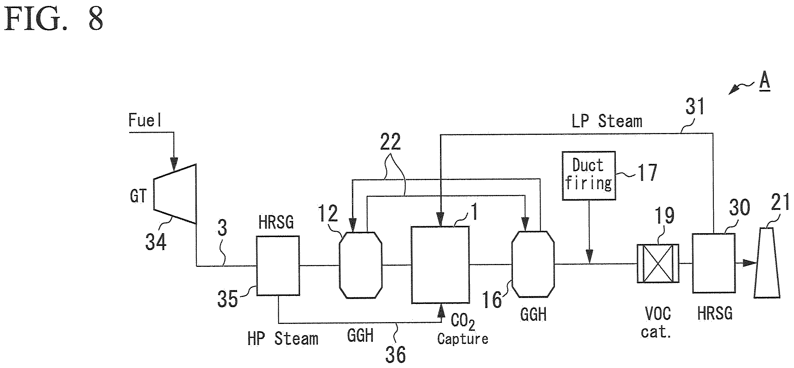

Next, an exhaust gas treatment system and an exhaust gas treatment method according to an eighth embodiment will be described with reference to FIG. 8. This embodiment relates to an exhaust gas treatment system for treating an exhaust gas exhausted from a gas turbine of an electric power facility, similar to the fifth to seventh embodiments. Accordingly, the same components as those in the fifth to seventh embodiments are denoted by the same reference numerals and a detailed description thereof will be omitted.

The electric power facility according to an exhaust gas treatment system A of the present embodiment includes a gas turbine 34 for power generation that is driven by burning fossil fuel such as oil or LNG, as shown in FIG. 8.

Further, the exhaust gas treatment system A of the present embodiment includes a second exhaust heat recovery boiler 35, a first heat exchanger 12, a CO₂ recovery apparatus 1, a second heat exchanger 16, a duct firing apparatus 17, a VOC removal apparatus 19, and a first exhaust heat recovery boiler 30.

Further, in the exhaust gas treatment system A and the exhaust gas treatment method of the present embodiment, an exhaust gas 3 from the gas turbine 34 is sent to the second exhaust heat recovery boiler 35 and steam 36 is generated. Further, the exhaust gas 3 cooled to a low temperature by the second exhaust heat recovery boiler 35 passes through the first heat exchanger 12 and heat is absorbed by the first heat exchanger 12. Accordingly, the exhaust gas 3 can be cooled to a low temperature and sent to the CO₂ recovery apparatus 1 and CO₂ can be efficiently recovered by the CO₂ recovery apparatus 1 from the large amount of exhaust gas 3 generated from the gas turbine 34 of the electric power facility.

Further, in this case, the steam 36 generated by the second exhaust heat recovery boiler 35 is sent to a regeneration tower 7 of the CO₂ recovery apparatus 1, and the CO₂ absorption liquid 6 is heated using this steam 36. Accordingly, CO₂ can be recovered from the exhaust gas 3 using the steam 36 generated by the second exhaust heat recovery boiler 35 in the CO₂ recovery apparatus 1.

Further, the exhaust gas 3 having a low temperature after CO₂ has been recovered by the CO₂ recovery apparatus 1 passes through the second heat exchanger 16, the heat absorbed by the first heat exchanger 12 is released in the second heat exchanger 16, and the exhaust gas 3 passing through the CO₂ recovery apparatus 1 is heated. Further, the exhaust gas 3 is further heated to a high temperature by the duct firing apparatus 17.

Accordingly, the exhaust gas 3 having a low temperature after being treated by the CO₂ recovery apparatus 1 is heated to a high temperature before the exhaust gas 3 is supplied to the VOC removal apparatus 19, and VOC of the exhaust gas 3 can be reliably removed and reduced through a catalytic reaction of the VOC removal apparatus 19.

Further, the exhaust gas 3 is sent to the first exhaust heat recovery boiler 30 after VOC has been decomposed/adsorbed and removed by the VOC removal apparatus 19. Further, steam 31 is generated by the first exhaust heat recovery boiler 30 using heat of the high temperature exhaust gas 3. The steam 31 generated by the first exhaust heat recovery boiler 30 in this way is sent to a regeneration tower 7 of the CO₂ recovery apparatus 1, and the CO₂ absorption liquid 6 is heated using this steam 31. Thereby, CO₂ can be recovered from the exhaust gas 3 using the steam 31 generated by the first exhaust heat recovery boiler 30 in the CO₂ recovery apparatus 1.

Accordingly, in the exhaust gas treatment system A and the exhaust gas treatment method of the present embodiment, it is possible to heat the exhaust gas 3 cooled to a low temperature in order to efficiently recover CO₂ in the CO₂ recovery apparatus 1 to a high temperature that allows the VOC to be decomposed/adsorbed and removed using a catalyst, to remove CO₂ from the large amount of exhaust gas 3 generated from the gas turbine 34 of the electric power facility, and to remove VOC by decomposing/adsorbing VOC using a catalyst.

Further, in the exhaust gas treatment system A and the exhaust gas treatment method of the present embodiment, the exhaust gas 3 having a low temperature after being treated by the CO₂ recovery apparatus 1 can be heated to a high temperature by the duct firing apparatus 17 before the exhaust gas 3 is supplied to the VOC removal apparatus 19.

Accordingly, with the CO₂ recovery apparatus 1, it is possible to recover CO₂ from the large amount of exhaust gas 3 generated from the electric power facility. It is also possible to heat the exhaust gas 3 having a low temperature after CO₂ is recovered by the CO₂ recovery apparatus 1 to a high temperature that allows the VOC to be decomposed/adsorbed and removed using a catalyst, and to reliably remove and reduce VOC through a catalytic reaction of the VOC removal apparatus 19.

Further, the steam 36 generated by the second exhaust heat recovery boiler 35 is sent to the regeneration tower 7 of the CO₂ recovery apparatus 1 before the steam is supplied to the CO₂ recovery apparatus 1, and the CO₂ absorption liquid 6 is heated using this steam 36. Further, after VOC is decomposed/adsorbed and removed by the VOC removal apparatus 19, the steam 31 generated by the first exhaust heat recovery boiler 30 is sent to the regeneration tower 7 of the CO₂ recovery apparatus 1 and the CO₂ absorption liquid 6 is heated using this steam 31.

Accordingly, it is possible to generate the steam 36 and 31 using the heat recovered from the exhaust gas 3 by the second exhaust heat recovery boiler 35 and the first exhaust heat recovery boiler 30, and recover CO₂ from the exhaust gas 3 using the steam 36 and 31 in the CO₂ recovery apparatus 1. Thus, it is unnecessary to separately generate steam in an auxiliary boiler or the like in the CO₂ recovery apparatus 1 or it is possible to reduce a consumption amount of the steam, to reliably remove CO₂ and the VOC from the exhaust gas 3, and to reduce running cost. Further, it is possible to release the exhaust gas 3 cooled to a low temperature from the chimney 21 by recovering the heat of the exhaust gas 3 to cool the exhaust gas 3 in the first exhaust heat recovery boiler 30 before the exhaust gas 3 is released from the chimney 21.

Further, in the exhaust gas treatment system A and the exhaust gas treatment method of the present embodiment, the heat of the exhaust gas 3 can be absorbed by the first heat exchanger 12, a heat medium 22 having absorbed this heat can be sent to the second heat exchanger 16, and the exhaust gas 3 can be heated before the exhaust gas 3 is treated by the VOC removal apparatus 19. Accordingly, between the CO₂ recovery apparatus 1 and the VOC removal apparatus 19, the exhaust gas 3 can be heated to a high temperature that allows the VOC to be decomposed/adsorbed and removed using a catalyst. Thus, it is possible to heat the exhaust gas 3 to a high optimal temperature while reducing heating by the duct firing apparatus 17 since the heat of the exhaust gas 3 can be absorbed by the first heat exchanger 12 and the exhaust gas 3 can be heated by the second heat exchanger 16 before the exhaust gas 3 is supplied to the VOC removal apparatus 19. Accordingly, it is possible to reduce fuel such as natural gas required for heating the exhaust gas 3 in the duct firing apparatus 17 and to reduce running cost.

### [Ninth embodiment]

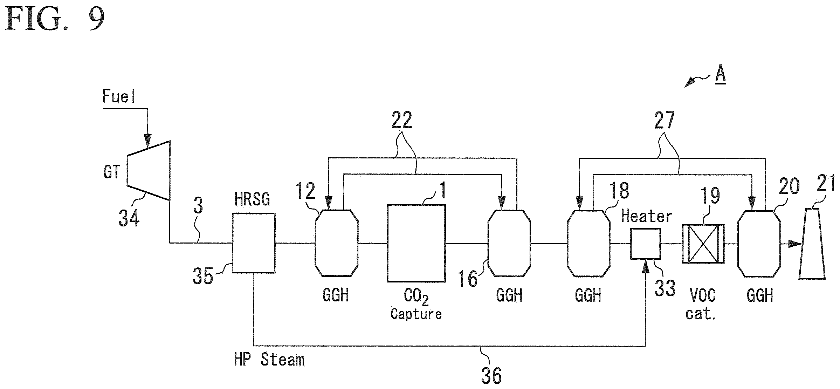

Next, an exhaust gas treatment system and an exhaust gas treatment method according to a ninth embodiment will be described with reference to FIG. 9. This embodiment relates to an exhaust gas treatment system for treating an exhaust gas exhausted from a gas turbine of an electric power facility, similar to the fifth to eighth embodiments. Accordingly, the same components as those in the fifth to eighth embodiment are denoted by the same reference numerals and a detailed description thereof will be omitted.

The electric power facility according to an exhaust gas treatment system A of the present embodiment includes a gas turbine 34 for power generation that is driven by burning fossil fuel such as oil or LNG, as shown in FIG. 9.

Further, the exhaust gas treatment system A of the present embodiment includes a second exhaust heat recovery boiler 35, a first heat exchanger 12, a CO₂ recovery apparatus 1, a second heat exchanger 16, a fourth heat exchanger 18, a steam heating apparatus 33, a VOC removal apparatus 19, and a third heat exchanger 20.

Further, in the exhaust gas treatment system A and the exhaust gas treatment method of the present embodiment, the exhaust gas 3 from the gas turbine 34 is sent to the second exhaust heat recovery boiler 35 to generate steam 36. Further, the exhaust gas 3 cooled to a low temperature in the second exhaust heat recovery boiler 35 passes through the first heat exchanger 12, and heat is absorbed by the first heat exchanger 12. The exhaust gas 3 can be cooled to a low temperature and sent to the CO₂ recovery apparatus 1, and CO₂ can be efficiently recovered in the CO₂ recovery apparatus 1 from the large amount of exhaust gas 3 generated from the gas turbine 34 of the electric power facility.

Further, the exhaust gas 3 having a low temperature after CO₂ has been recovered by the CO₂ recovery apparatus 1 passes through the second heat exchanger 16, and the exhaust gas 3 passing through the CO₂ recovery apparatus 1 is heated using the heat absorbed by the first heat exchanger 12. Further, before the exhaust gas 3 is released from the chimney 21, the heat of the exhaust gas 3 can be absorbed by the third heat exchanger 20, and a heat medium 27 having absorbed this heat is sent to the fourth heat exchanger 18 to heat the exhaust gas 3 before the exhaust gas 3 is treated by the VOC removal apparatus 19. Further, the steam 36 generated by the second exhaust heat recovery boiler 35 is sent to the steam heating apparatus 33, and the exhaust gas 3 is heated by the steam heating apparatus 33 using the steam 36.

Accordingly, the exhaust gas 3 having a low temperature after being treated by the CO₂ recovery apparatus 1 is heated to a high temperature before the exhaust gas 3 is supplied to the VOC removal apparatus 19, and VOC of the exhaust gas 3 can be reliably removed and reduced through a catalytic reaction of the VOC removal apparatus 19.

Accordingly, in the exhaust gas treatment system A and the exhaust gas treatment method of the present embodiment, it is possible to heat the exhaust gas 3, which has been cooled to a low temperature in order to efficiently recover CO₂ in the CO₂ recovery apparatus, to a high temperature that allows the VOC to be decomposed/adsorbed and removed using a catalyst, to remove CO₂ from the large amount of exhaust gas 3 generated from the gas turbine 34 of the electric power facility, and to remove VOC by decomposing/adsorbing VOC using a catalyst.

Further, the steam 36 generated by the second exhaust heat recovery boiler 35 can be sent to the steam heating apparatus 33 before the steam 36 is supplied to the CO₂ recovery apparatus 1, the exhaust gas 3 can be heated using this steam 36 before the exhaust gas 3 is treated by the VOC removal apparatus 19, and VOC of the exhaust gas 3 can be reliably removed and reduced through a catalytic reaction of the VOC removal apparatus 19. Thus, it is unnecessary to separately burn fuel and generate heat in the steam heating apparatus 33 and it is possible to reduce running cost.

Further, since the heat of the exhaust gas 3 can be absorbed by the first heat exchanger 12 and the exhaust gas 3 can be heated by the second heat exchanger 16 before the exhaust gas 3 is supplied to the VOC removal apparatus 19, and since the heat of the exhaust gas 3 can be absorbed by the third heat exchanger 20 and the exhaust gas 3 can be heated by the fourth heat exchanger 18 before the exhaust gas 3 is supplied to the VOC removal apparatus 19, it is possible to reduce running cost from this point of view.

Further, before the exhaust gas 3 is released from the chimney 21, the heat of the exhaust gas 3 can be absorbed by the fourth heat exchanger 18, the heat medium 27 having absorbed this heat can be sent to the fourth heat exchanger 18, and the exhaust gas 3 can be heated before the exhaust gas 3 is treated by the VOC removal apparatus 19. Accordingly, the heat of the exhaust gas 3 to be released from the chimney 21 can be recovered and used to heat the exhaust gas 3 to a high temperature that allows the VOC to be decomposed/adsorbed and removed using a catalyst. Further, the exhaust gas 3 cooled to a low temperature by absorbing the heat of the exhaust gas 3 to cool the exhaust gas 3 using the third heat exchanger 20 can be released from the chimney 21.

### [Tenth embodiment]

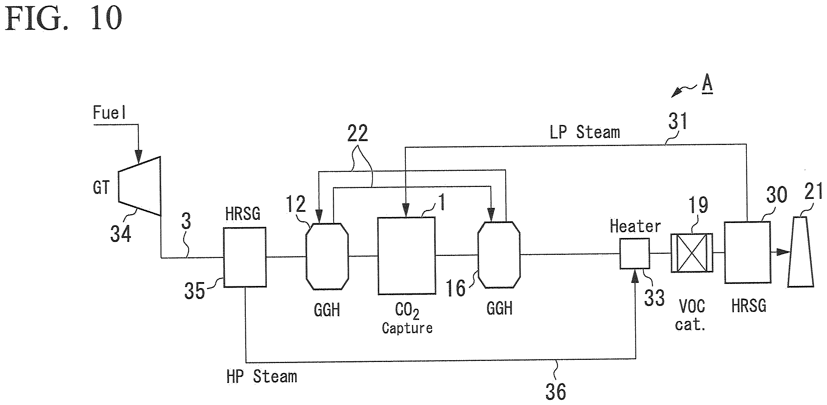

Next, an exhaust gas treatment system and an exhaust gas treatment method according to a tenth embodiment will be described with reference to FIG. 10. This embodiment relates to an exhaust gas treatment system for treating an exhaust gas exhausted from a gas turbine of an electric power facility, similar to the fifth to ninth embodiments. Accordingly, the same components as those in the fifth to ninth embodiments are denoted by the same reference numerals and a detailed description thereof will be omitted.

The electric power facility of the present embodiment includes a gas turbine 34 for power generation that is driven by burning fossil fuel such as oil or LNG, as shown in FIG. 10.

Further, the exhaust gas treatment system A of the present embodiment includes a second exhaust heat recovery boiler 35, a first heat exchanger 12, a CO₂ recovery apparatus 1, a second heat exchanger 16, a steam heating apparatus 33, a VOC removal apparatus 19, and a first exhaust heat recovery boiler 30.

Further, in the exhaust gas treatment system A and the exhaust gas treatment method of the present embodiment, an exhaust gas 3 from the gas turbine 34 is sent to the second exhaust heat recovery boiler 35 to generate steam 36. Further, the exhaust gas 3 cooled to a low temperature in the second exhaust heat recovery boiler 35 passes through the first heat exchanger 12 and heat is absorbed by this first heat exchanger 12. Accordingly, the exhaust gas 3 can be cooled to a low temperature and sent to the CO₂ recovery apparatus 1, and CO₂ can be efficiently recovered by the CO₂ recovery apparatus 1 from the large amount of exhaust gas 3 generated from the gas turbine 34 of the electric power facility.

Further, in this case, the steam 36 generated by the second exhaust heat recovery boiler 35 is sent to the steam heating apparatus 33, and the exhaust gas 3 passing through the CO₂ recovery apparatus 1 is heated by the steam heating apparatus 33 using this steam 36.

Further, the exhaust gas 3 having a low temperature after CO₂ has been recovered by the CO₂ recovery apparatus 1 passes through the second heat exchanger 16, and the exhaust gas 3 passing through the CO₂ recovery apparatus 1 is heated by the heat absorbed by the first heat exchanger 12.

Accordingly, the exhaust gas 3 having a low temperature after being treated by the CO₂ recovery apparatus 1 is heated to a high temperature before the exhaust gas 3 is supplied to the VOC removal apparatus 19, and VOC of the exhaust gas 3 can be reliably removed and reduced through a catalytic reaction of the VOC removal apparatus 19.

Further, the exhaust gas 3 after VOC has been decomposed/adsorbed and removed by the VOC removal apparatus 19 is sent to the first exhaust heat recovery boiler 30. Further, steam 31 is generated by this first exhaust heat recovery boiler 30 using heat of the high temperature exhaust gas 3. The steam 31 generated by the first exhaust heat recovery boiler 30 in this way is sent to the regeneration tower 7 of the CO₂ recovery apparatus 1, and the CO₂ absorption liquid 6 is heated using this steam 31. Thus, the steam 31 can be generated by the heat recovered from the exhaust gas 3 by the first exhaust heat recovery boiler 30, and CO₂ can be recovered from the exhaust gas 3 using this steam 31 in the CO₂ recovery apparatus 1.

Accordingly, in the exhaust gas treatment system A and the exhaust gas treatment method of the present embodiment, the exhaust gas 3 cooled to a low temperature in order to efficiently recover CO₂ in the CO₂ recovery apparatus 1 can be heated to a high temperature that allows the VOC to be decomposed/adsorbed and removed using a catalyst, CO₂ can be removed from the large amount of exhaust gas 3 generated from the gas turbine 34 of the electric power facility, and VOC can be removed by decomposing/adsorbing VOC using a catalyst.

Further, in the exhaust gas treatment system A and the exhaust gas treatment method of the present embodiment, the steam 36 generated by the second exhaust heat recovery boiler 35 is sent to the steam heating apparatus 33 before the steam 36 is supplied to the CO₂ recovery apparatus 1, and the exhaust gas 3 can be heated using this steam 36 before the exhaust gas 3 is treated by the VOC removal apparatus 19. Accordingly, VOC of the exhaust gas 3 is reliably removed and reduced through a catalytic reaction of the VOC removal apparatus 19. Thus, it is unnecessary to separately burn fuel in the steam heating apparatus 33 to generate heat and it is possible to reduce running cost. That is to say, it is possible to efficiently and economically treat the exhaust gas 3 while conserving energy.

Further, after VOC is decomposed/adsorbed and removed by the VOC removal apparatus 19, the steam 31 generated by the first exhaust heat recovery boiler 30 is sent to the regeneration tower 7 of the CO₂ recovery apparatus 1, and the CO₂ absorption liquid 6 is heated using this steam 31. Accordingly, the steam 31 can be generated using the heat recovered from the exhaust gas 3 by the first exhaust heat recovery boiler 30, and CO₂ can be recovered from the exhaust gas 3 using this steam 31 in the CO₂ recovery apparatus 1. Thus, it is unnecessary to separately generate steam in an auxiliary boiler or the like in the CO₂ recovery apparatus 1, or it is possible to reduce a consumption amount of the steam, to reliably remove CO₂ and the VOC from the exhaust gas 3, and to reduce running cost. Further, it is possible to release the exhaust gas 3 cooled to a low temperature from the chimney 21 by recovering heat of the exhaust gas 3 to cool the exhaust gas 3 in the first exhaust heat recovery boiler 30 before the exhaust gas 3 is released from the chimney 21.

Further, in the exhaust gas treatment system A and the exhaust gas treatment method of the present embodiment, the heat of the exhaust gas 3 can be absorbed by the first heat exchanger 12, a heat medium 22 having absorbed this heat can be sent to the second heat exchanger 16, and the exhaust gas 3 can be heated before the exhaust gas 3 is treated by the VOC removal apparatus 19. Accordingly, between the CO₂ recovery apparatus 1 and the VOC removal apparatus 19, the exhaust gas 3 can be heated to a high temperature that allows the VOC to be decomposed/adsorbed and removed using a catalyst. Thus, since the heat of the exhaust gas 3 can be absorbed by the first heat exchanger 12 and the exhaust gas 3 can be heated by the second heat exchanger 16 before the exhaust gas 3 is supplied to the VOC removal apparatus 19, it is possible to reduce running cost from this point of view.

### [Eleventh embodiment]

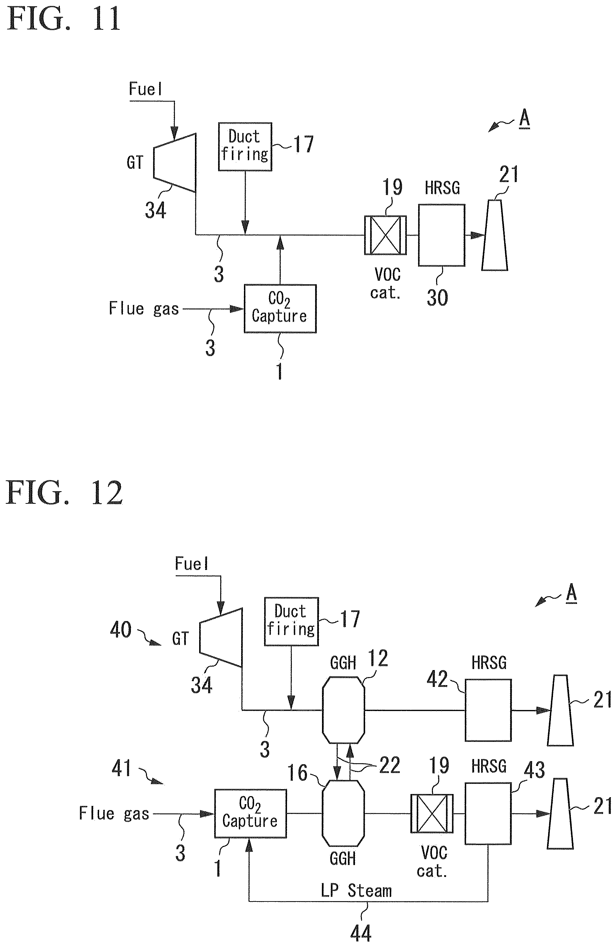

Next, an exhaust gas treatment system and an exhaust gas treatment method according to an eleventh embodiment will be described with reference to FIG. 11. Further, the same components as those in the first to tenth embodiments are denoted by the same reference numerals and a detailed description thereof will be omitted.

The electric power facility of the present embodiment includes a gas turbine 34 for power generation that is driven by burning fossil fuel such as oil or LNG, as shown in FIG. 11.

Further, the exhaust gas treatment system A of the present embodiment includes a duct firing apparatus 17, a VOC removal apparatus 19, and a first exhaust heat recovery boiler 30. Further, the exhaust gas treatment system A of the present embodiment includes the above components from the duct firing apparatus 17 to the first exhaust heat recovery boiler 30 in this order up to a point at which an exhaust gas 3 exhausted from the gas turbine 34 is released to the atmosphere through the chimney 21.

Further, in the exhaust gas treatment system A of the present embodiment, for example, a CO₂ recovery apparatus 1 for treating an exhaust gas 3 from another boiler of another electric power facility is separately provided. The exhaust gas 3 treated by the CO₂ recovery apparatus 1 is introduced between the duct firing apparatus 17 and the VOC removal apparatus 19, mixed with the exhaust gas 3 from the gas turbine 34, and treated.

Further, in the exhaust gas treatment system A and the exhaust gas treatment method, first, the exhaust gas 3 from the gas turbine 34 is further heated by the duct firing apparatus 17 to a high temperature. Further, the exhaust gas 3 treated by the CO₂ recovery apparatus 1 of another system is mixed with the exhaust gas 3 heated by the duct firing apparatus 17 in this way. Thus, a temperature of the exhaust gas 3 after mixing becomes 200 to 300 °C or more by mixing the exhaust gas 3 having a low temperature after being treated by the CO₂ recovery apparatus 1 with the exhaust gas 3 heated by the duct firing apparatus 17 before the exhaust gas 3 is supplied to the VOC removal apparatus 19. Thus, it is possible to reliably remove and reduce VOC of the exhaust gas 3 through a catalytic reaction of the VOC removal apparatus 19.

Further, it is possible to release the exhaust gas 3 cooled to a low temperature from the chimney 21 by recovering the heat of the exhaust gas 3 to cool the exhaust gas 3 in the first exhaust heat recovery boiler 30 before the exhaust gas 3 is released from the chimney 21.

Accordingly, in the exhaust gas treatment system A and the exhaust gas treatment method of the present embodiment, it is possible to heat the exhaust gas 3 cooled to a low temperature in order to efficiently recover CO₂ in the separately provided CO₂ recovery apparatus 1 to a high temperature that allows the VOC to be decomposed/adsorbed and removed using a catalyst by being introduced into and mixed with the exhaust gas 3 from the gas turbine 34 heated by the duct firing apparatus 17, to remove CO₂ in the exhaust gas 3 in another CO₂ recovery apparatus 1, and to remove the large amount of exhaust gas 3 generated from the gas turbine 34 of the electric power facility and VOC in the exhaust gas 3 by decomposing/adsorbing the exhaust gas 3 and VOC using a catalyst.

Further, it is possible to release the exhaust gas 3 cooled to a low temperature from the chimney 21 by recovering the heat of the exhaust gas 3 to cool the exhaust gas 3 in the first exhaust heat recovery boiler 30 before the exhaust gas 3 is released from the chimney 21.

### [Twelfth embodiment]

Next, an exhaust gas treatment system and an exhaust gas treatment method according to a twelfth embodiment will be described with reference to FIG. 12. Further, the same components as those in the first to eleventh embodiments are denoted by the same reference numerals and a detailed description thereof will be omitted.

Here, an electric power facility of the present embodiment is, for example, an electric power facility of a combined cycle scheme that is a combination of a gas turbine 34 and a steam turbine. The exhaust gas treatment system A of the present embodiment is configured by combining a first exhaust gas treatment system 40 that treats an exhaust gas 3 from the gas turbine 34 for power generation that is driven by burning fossil fuel such as oil or LNG with a second exhaust gas treatment system 41 that treats an exhaust gas 3 from a boiler or the like, as shown in FIG. 12.

The first exhaust gas treatment system 40 that treats the exhaust gas 3 from the gas turbine 34 includes a duct firing apparatus 17, a first heat exchanger 12, and a third exhaust heat recovery boiler 42 in this order up to a point at which the exhaust gas 3 exhausted from the gas turbine 34 is released from the chimney 21 to the atmosphere.

Meanwhile, the second exhaust gas treatment system 41 that treats the exhaust gas 3 from a boiler or the like includes a CO₂ recovery apparatus 1, a second heat exchanger 16, a VOC removal apparatus 19 and a fourth exhaust heat recovery boiler 43 in this order up to a point at which the exhaust gas 3 exhausted from the boiler or the like is released from the chimney 21 to the atmosphere.

In the first exhaust gas treatment system 40, the exhaust gas 3 from the gas turbine 34 is heated by the duct firing apparatus 17, this heat is recovered by the first heat exchanger 12, steam is generated by the third exhaust heat recovery boiler 42 to cool the exhaust gas 3 to a low temperature, and the resultant exhaust gas 3 is exhausted from the chimney 21.

Further, in the exhaust gas treatment system A and the exhaust gas treatment method of the present embodiment, in the second exhaust gas treatment system 41, CO₂ is recovered from the exhaust gas 3 exhausted from the boiler or the like by the CO₂ recovery apparatus 1 and the exhaust gas 3 cooled to a low temperature is heated by the second heat exchanger 16. In this case, before the exhaust gas 3 is treated by the VOC removal apparatus 19, the exhaust gas 3 is heated using the heat recovered by the first exhaust gas treatment system 40, by circulating a heat medium 22 between the first heat exchanger 12 recovering the heat heated by the duct firing apparatus 17 of the first exhaust gas treatment system 40 and the second heat exchanger 16 of the second exhaust gas treatment system 41.

Accordingly, the exhaust gas 3 having a low temperature after being treated by the CO₂ recovery apparatus 1 can be heated before the exhaust gas 3 is supplied to the VOC removal apparatus 19, and VOC of the exhaust gas 3 can be reliably removed and reduced through a catalytic reaction of the VOC removal apparatus 19.

Further, the exhaust gas 3 after VOC is removed by the VOC removal apparatus 19 of the second exhaust gas treatment system 41 is treated by the fourth exhaust heat recovery boiler 43 to generate steam 44, and this exhaust gas 3 is cooled. Further, the steam 44 generated by the fourth exhaust heat recovery boiler 43 is supplied to the CO₂ recovery apparatus 1 and used to recover CO₂ from the exhaust gas 3. Further, the exhaust gas 3 having a low temperature by being treated by the fourth exhaust heat recovery boiler 43 is released from the chimney 21 to the atmosphere.

Accordingly, in the exhaust gas treatment system A and the exhaust gas treatment method of the present embodiment, the exhaust gas 3 from the gas turbine 34 of another system is heated by the duct firing apparatus 17, and the exhaust gas 3 treated by the CO₂ recovery apparatus 1 is heated using this heat. Accordingly, with the CO₂ recovery apparatus 1, it is possible to recover CO₂ from the large amount of exhaust gas 3 generated from the electric power facility. It is also possible to heat the exhaust gas 3 having a low temperature after CO₂ is recovered by the CO₂ recovery apparatus 1 to a high temperature that allows the VOC to be decomposed/adsorbed and removed using a catalyst, and to reliably remove and reduce VOC by the catalytic reaction of the VOC removal apparatus.

Further, after VOC is decomposed/adsorbed and removed by the VOC removal apparatus 19, the steam 44 generated by the fourth exhaust heat recovery boiler 43 is sent to a regeneration tower 7 of the CO₂ recovery apparatus 1 and the CO₂ absorption liquid 6 is heated using this steam 44. Accordingly, it is possible to generate the steam 44 using the heat recovered from the exhaust gas 3 by the fourth exhaust heat recovery boiler 43 and to recover CO₂ from the exhaust gas 3 in the CO₂ recovery apparatus 1 using this steam 44. Thus, it is unnecessary to separately generate steam in an auxiliary boiler or the like in the CO₂ recovery apparatus 1 or it is possible to reduce a consumption amount of the steam, to reliably remove CO₂ and the VOC from the exhaust gas 3, and to reduce running cost. That is to say, it is possible to efficiently and economically treat the exhaust gas 3 while conserving energy. In addition, it is possible to release the exhaust gas 3 cooled to a low temperature from the chimney 21 by recovering the heat of the exhaust gas 3 to cool the exhaust gas 3 in the third exhaust heat recovery boiler 42 and the fourth exhaust heat recovery boiler 43 before the exhaust gas 3 is released from the chimney 21.

### [Thirteenth embodiment]

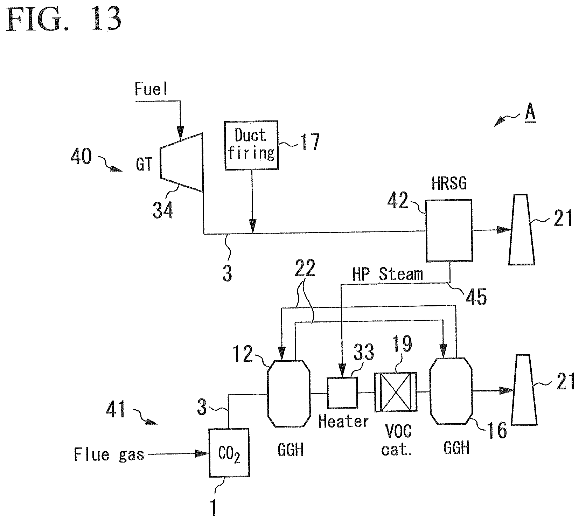

Next, an exhaust gas treatment system and an exhaust gas treatment method according to a thirteenth embodiment will be described with reference to FIG. 13. Further, the same components as those in the first to twelfth embodiments are denoted by the same reference numerals and a detailed description thereof will be omitted.

Here, an electric power facility of the present embodiment is, for example, an electric power facility of a combined cycle scheme that is a combination of a gas turbine 34 and a steam turbine, similar to the twelfth embodiment. The exhaust gas treatment system A of the present embodiment is configured by combining a first exhaust gas treatment system 40 that treats an exhaust gas 3 from a gas turbine 34 for power generation that is driven by burning fossil fuel such as oil or LNG, with a second exhaust gas treatment system 41 that treats an exhaust gas 3 from a boiler or the like, as shown in FIG. 13.

Meanwhile, the first exhaust gas treatment system 40 that treats the exhaust gas 3 from the gas turbine 34 of the present embodiment includes a duct firing apparatus 17 and a third exhaust heat recovery boiler 42 in this order up to a point at which the exhaust gas 3 exhausted from the gas turbine 34 is released from a chimney 21 to the atmosphere.

The second exhaust gas treatment system 41 that treats the exhaust gas 3 from the boiler or the like includes a CO₂ recovery apparatus 1, a the first heat exchanger 12, a steam heating apparatus 33, a VOC removal apparatus 19, and a second heat exchanger 16 in this order up to a point at which the exhaust gas 3 exhausted from the boiler or the like is released from the chimney 21 to the atmosphere.

In the first exhaust gas treatment system 40, the exhaust gas 3 from the gas turbine 34 is heated by the duct firing apparatus 17, steam is generated by the third exhaust heat recovery boiler 42 using this heat to cool the exhaust gas 3 to a low temperature, and the exhaust gas 3 is exhausted from the chimney 21.

Further, in the exhaust gas treatment system A and the exhaust gas treatment method of the present embodiment, in the second exhaust gas treatment system 41, CO₂ is recovered from the exhaust gas 3 exhausted from a boiler or the like by the CO₂ recovery apparatus 1, and the exhaust gas 3 cooled to a low temperature in this way is heated by the first heat exchanger 12. In this case, the exhaust gas 3 is heated by the first heat exchanger 12 before the exhaust gas 3 is treated by the VOC removal apparatus 19 by circulating the heat medium 22 between the first heat exchanger 12 and the second heat exchanger 16 absorbing the heat of the exhaust gas 3 treated by the VOC removal apparatus 19.

Further, the exhaust gas 3 passing through the first heat exchanger 12 is heated by the steam heating apparatus 33. In this case, the exhaust gas 3 from the gas turbine 34 of the first exhaust gas treatment system 40 is heated by the duct firing apparatus 17, and steam 45 generated by the third exhaust heat recovery boiler 42 using this heat is supplied to the steam heating apparatus 33, and the exhaust gas 3 of the second exhaust gas treatment system 41 is heated using heat of this steam 45.

Accordingly, the exhaust gas 3 having a low temperature after being treated by the CO₂ recovery apparatus 1 is heated before the exhaust gas 3 is supplied to the VOC removal apparatus 19, and VOC of the exhaust gas 3 can be reliably removed and reduced through a catalytic reaction of the VOC removal apparatus 19.

Further, the exhaust gas 3 after VOC is removed by the VOC removal apparatus 19 of the second exhaust gas treatment system 41 is subjected to heat release treatment by the second heat exchanger 16 to have a low temperature and released from the chimney 21 to the atmosphere.

Accordingly, in the exhaust gas treatment system A and the exhaust gas treatment method of the present embodiment, the exhaust gas 3 having a low temperature by being treated by the CO₂ recovery apparatus 1 can be heated to a high temperature that allows the VOC to be decomposed/adsorbed and removed using a catalyst, by heating the exhaust gas 3 from the gas turbine 34 of the other system in the duct firing apparatus 17, recovering this heat in the third exhaust heat recovery boiler 42, generating the steam 45, and using this steam 45 in the steam heating apparatus 33. Accordingly, CO₂ in the exhaust gas 3 can be removed by the CO₂ recovery apparatus 1, and a large amount of exhaust gas 3 generated from the gas turbine 34 of the electric power facility and the VOC in the exhaust gas 3 can be removed by decomposing/adsorbing the exhaust gas 3 and the VOC in the exhaust gas 3 using a catalyst.

Further, before the exhaust gas 3 is released from the chimney 21, the heat of the exhaust gas 3 can be absorbed by the second heat exchanger 16, a heat medium 22 having absorbed this heat is sent to the first heat exchanger 12, and the exhaust gas 3 can be heated before the exhaust gas 3 is treated by the VOC removal apparatus 19. Accordingly, the heat of the exhaust gas 3 to be released from the chimney 21 can be recovered and used to heat the exhaust gas to a high temperature that allows the VOC to be decomposed/adsorbed and removed using a catalyst. Further, the exhaust gas 3 cooled to a low temperature can be released from the chimney 21 by absorbing the heat of the exhaust gas 3 to cool the exhaust gas 3 in the second heat exchanger 16 in this way.

While the embodiments of the exhaust gas treatment system according to the present invention have been described above, the present invention is not limited to the first to thirteenth embodiments described above but may be appropriately modified without departing from the scope and spirit of the present invention.

### [Industrial Applicability]

According to the exhaust gas treatment system described above, the exhaust gas having a low temperature after CO₂ is recovered by the CO₂ recovery apparatus can be heated to a high temperature that allows the VOC to be decomposed (or adsorbed) and removed using a catalyst, CO₂ can be recovered and removed in the CO₂ recovery apparatus from a large amount of exhaust gas generated by an electric power facility such as a thermal power plant, and the VOC can be reliably removed through a catalytic reaction of the VOC removal apparatus.

### [Reference Signs List]

1 CO₂ recovery apparatus
2 desulfurization cooling apparatus
3 exhaust gas
4 CO₂ absorption liquid (lean liquid)
5 absorption tower
6 CO₂ absorption liquid (rich liquid)
7 regeneration tower
8 compressor
10 boiler
11 air heater
12 first heat exchanger
13 electrostatic precipitator
14 blower
15 wet scrubber
16 second heat exchanger (heating device)
17 duct firing apparatus (heating device)
18 fourth heat exchanger (heating device)
19 VOC removal apparatus
20 third heat exchanger (cooling device)
21 chimney
22 heat medium
23 absorption liquid scrubber
24 liquid transportation pump
25 return pump
26 cooler
27 heat medium
30 first exhaust heat recovery boiler (cooling device)
31 steam
32 steam
33 steam heating apparatus (heating device)
34 gas turbine
35 second exhaust heat recovery boiler
36 steam
40 first exhaust gas treatment system
41 second exhaust gas treatment system
42 third exhaust heat recovery boiler (cooling device)
43 fourth exhaust heat recovery boiler (cooling device)
44 steam
45 steam

## Claims

1. An exhaust gas treatment system including a CO₂ recovery apparatus (1) that recovers CO₂ from an exhaust gas exhausted from a boiler (10) or a turbine, and a VOC removal apparatus (19) that removes a VOC from the exhaust gas (3) after the exhaust gas is treated by the CO₂ recovery apparatus (1), the exhaust gas treatment system comprising:
a heating device (16;18;33) that heats an exhaust gas after the exhaust gas is treated by the CO₂ recovery apparatus (1) and before the exhaust gas is treated by the VOC removal apparatus (19); and
a cooling device (20) that cools the exhaust gas after the exhaust gas is treated by the VOC removal apparatus (19),
a first heat exchanger (12) that causes a heat medium to absorb a heat of the exhaust gas (3) provided between the boiler (10) or the turbine and the CO₂ recovery apparatus (1), and
a second heat exchanger (16) that releases the heat from the heat medium supplied from the first heat exchanger (12) to heat the exhaust gas after the exhaust gas is treated by the CO₂ recovery apparatus (1), wherein.
the cooling device includes a third heat exchanger (20) that causes a heat medium to absorb a heat of the exhaust gas after the exhaust gas is treated by the VOC removal apparatus (19),
a fourth heat exchanger (18) is provided, the fourth heat exchanger (18) that releases the heat from the heat medium supplied from the third heat exchanger (20) to heat the exhaust gas after the exhaust gas is treated by the CO₂ recovery apparatus (1),
the heating device further includes a steam heating apparatus (33) that heats the exhaust gas using steam after the exhaust gas is treated by the CO₂ recovery apparatus (1), and
the steam heating the exhaust gas in the steam heating apparatus is steam generated in the boiler (10).

2. The exhaust gas treatment system according to Claim 1, wherein the CO₂ recovery apparatus comprises:
an absorption tower (5) that brings CO₂ absorption liquid in contact with the exhaust gas exhausted from the boiler (10) or the turbine to absorb and remove CO₂ from the exhaust gas; and
a regeneration tower (7) that regenerates the CO₂ absorption liquid while releasing and recovering CO₂ from the CO₂ absorption liquid by heating the CO₂ absorption liquid having absorbed CO₂ in the absorption tower using a steam,
wherein the cooling device includes a first exhaust heat recovery boiler (30) that generates steam using heat of the exhaust gas after the exhaust gas is treated by the VOC removal apparatus, and
wherein the steam heating the CO₂ absorption liquid of the regeneration tower of the CO₂ recovery apparatus is the steam generated by the first exhaust heat recovery boiler.

3. The exhaust gas treatment system according to Claim 1, further comprising:
a fifth heat exchanger (12) that causes a heat medium to absorb a heat of an exhaust gas exhausted from another boiler or another turbine ; and
a sixth heat exchanger (16) that releases the heat from the heat medium supplied from the fifth heat exchanger to heat the exhaust gas after the exhaust gas is treated by the CO₂ recovery apparatus.

4. An exhaust gas treatment method including recovering, by a CO₂ recovery apparatus (1), CO₂ from an exhaust gas exhausted from a boiler (10) or a turbine, and removing, by a VOC removal apparatus (19), a VOC from the exhaust gas after the exhaust gas is treated by the CO₂ recovery apparatus (1), the exhaust treatment method **characterized by** comprising:
heating, by a heating device (16; 18; 33) , the exhaust gas (3) after the exhaust gas is treated by the CO₂ recovery apparatus (1) and before the exhaust gas is treated by the VOC removal apparatus (19); and
cooling, by a cooling device (20), the exhaust gas after the exhaust gas is treated by the VOC removal apparatus (19),
causing, by a first heat exchanger (12) provided between the boiler (10) or the turbine and the CO2 recovery apparatus (1), a heat of the exhaust gas to be absorbed in a heat medium, and
releasing, by a second heat exchanger (16), the heat from the heat medium supplied from the first heat exchanger (12) to heat the exhaust gas after the exhaust gas is treated by the CO2 recovery apparatus (1),
wherein
a heat of the exhaust gas after the exhaust gas is treated by the VOC removal apparatus (19) is absorbed by a heat medium (27) provided in a third heat exchanger (20),
the exhaust gas after the exhaust gas is treated by the CO₂ recovery apparatus (1) is heated by a fourth heat exchanger (18) by the heat from the heat medium (27) supplied from the third heat exchanger (20) is released,
the method further comprising the step of heating the exhaust gas after the exhaust gas is treated by the CO₂ recovery apparatus (1) by using the steam generated in the boiler (10).

## Patentansprüche

1. Abgasbehandlungssystem mit einer CO₂-Rückgewinnungsvorrichtung (1), die CO₂ aus einem Abgas rückgewinnt, das von einem Kessel (10) oder einer Turbine ausgestoßen wird, und einer VOC-Entnahmevorrichtung (19), die eine VOC aus dem Abgas (3) entfernt, nachdem das Abgas durch die CO₂-Rückgewinnungsvorrichtung (1) behandelt wurde, wobei das Abgasbehandlungssystem umfasst:
eine Heizvorrichtung (16; 18; 33), die ein Abgas erwärmt, nachdem das Abgas durch die CO₂-Rückgewinnungsvorrichtung (1) behandelt wurde und bevor das Abgas durch die VOC-Entnahmevorrichtung (19) behandelt wird; und
eine Kühlvorrichtung (20), die das Abgas kühlt, nachdem das Abgas durch die VOC-Entnahmevorrichtung (19) behandelt wurde;
einen ersten zwischen dem Kessel (10) oder der Turbine und der CO₂-Rückgewinnungsvorrichtung (1) bereitgestellten Wärmetauscher (12), der bewirkt, dass ein Wärmemedium eine Wärme des Abgases (3) absorbiert, und
einen zweiten Wärmetauscher (16), der die Wärme aus dem Wärmemedium, das von dem ersten Wärmetauscher (12) zugeführt wird, freigibt, um das Abgas zu erwärmen, nachdem das Abgas durch die CO₂-Rückgewinnungsvorrichtung (1) behandelt wurde, wobei
die Kühlvorrichtung einen dritten Wärmetauscher (20) beinhaltet, der bewirkt, dass ein Wärmemedium Wärme des Abgases absorbiert, nachdem das Abgas durch die VOC-Entnahmevorrichtung (19) behandelt wurde,
ein vierter Wärmetauscher (18) vorgesehen ist, wobei der vierte Wärmetauscher (18) die Wärme aus dem Wärmemedium freigibt, das von dem dritten Wärmetauscher (20) zugeführt wurde, um das Abgas zu erwärmen, nachdem das Abgas durch die CO₂-Rückgewinnungsvorrichtung (1) behandelt wurde,
wobei die Heizvorrichtung weiterhin eine Dampf-Heizvorrichtung (33) beinhaltet, welche das Abgas unter Verwendung von Dampf erwärmt, nachdem das Abgas durch die CO₂-Rückgewinnungsvorrichtung (1) behandelt wurde, und
der Dampf, der das Abgas in der Dampf-Heizvorrichtung erwärmt, Dampf ist, der in dem Kessel (10) erzeugt wurde.

2. Abgasbehandlungssystem nach Anspruch 1, wobei die CO₂-Rückgewinnungsvorrichtung umfasst:
einen Absorptionsturm (5), der CO₂-Absorptionsflüssigkeit mit dem von dem Kessel (10) oder der Turbine ausgestoßenen Abgas in Kontakt bringt, um CO₂ aus dem Abgas zu absorbieren und zu entfernen; und
einen Regenerationsturm (7), der die CO₂-Absorptionsflüssigkeit regeneriert, während durch Erwärmen der CO₂-Absorptionsflüssigkeit, die in dem Absorptionsturm unter Verwendung von Dampf CO₂ absorbiert hat, CO₂ aus der CO₂-Absorptionsflüssigkeit freigegeben und rückgewonnen wird,
wobei die Kühlvorrichtung einen ersten Abwärme-Rückgewinnungskessel (30) beinhaltet, der Dampf unter Verwendung von Wärme des Abgases erzeugt, nachdem das Abgas durch die VOC-Entnahmevorrichtung behandelt wurde, und
wobei der Dampf, der die CO₂-Absorptionsflüssigkeit des Regenerationsturms der CO₂-Rückgewinnungsvorrichtung erwärmt, der Dampf ist, der von dem ersten Abwärme-Rückgewinnungskessel erzeugt wurde.

3. Abgasbehandlungssystem nach Anspruch 1, weiterhin umfassend:
einen fünften Wärmetauscher (12), der bewirkt, dass ein Wärmemedium Wärme eines Abgases absorbiert, das von einem anderen Kessel oder einer anderen Turbine ausgestoßen wurde; und
einen sechsten Wärmetauscher (16), der die Wärme aus dem Wärmemedium freigibt, das von dem fünften Wärmetauscher zugeführt wird, um das Abgas zu erwärmen, nachdem das Abgas durch die CO₂-Rückgewinnungsvorrichtung behandelt wurde.

4. Abgasbehandlungsverfahren einschließlich Rückgewinnung von CO₂ durch eine CO₂-Rückgewinnungsvorrichtung (1) aus einem Abgas, das aus einem Kessel (10) oder einer Turbine ausgestoßen wird und Entfernen von VOC aus dem Abgas durch eine VOC-Entnahmevorrichtung (19), nachdem das Abgas durch die CO₂-Rückgewinnungsvorrichtung (1) behandelt wurde, wobei das Abgasbehandlungsverfahren **dadurch gekennzeichnet ist, dass** es aufweist:
Erwärmen des Abgases (3) durch eine Heizvorrichtung (16; 18; 33) nachdem das Abgas durch die CO₂-Rückgewinnungsvorrichtung (1) behandelt wurde und bevor das Abgas durch die VOC-Entnahmevorrichtung (19) behandelt wird, und
Kühlen des Abgases durch eine Kühlvorrichtung (20) nachdem das Abgas durch die VOC-Entnahmevorrichtung (19) behandelt wurde,
Bewirken mittels eines ersten Wärmetauschers (12), der zwischen dem Kessel (10) oder der Turbine und der CO₂-Rückgewinnungsvorrichtung (1) vorgesehen ist, dass Wärme des Abgases in einem Wärmemedium absorbiert wird, und
Freigeben der Wärme aus dem Wärmemedium, das von dem ersten Wärmetauscher (12) zugeführt wird, durch einen zweiten Wärmetauscher (16), um das Abgas zu erwärmen, nachdem das Abgas durch die CO₂-Rückgewinnungsvorrichtung (1) behandelt wurde, wobei
Wärme des Abgases nach der Behandlung des Abgases durch die VOC-Entnahmevorrichtung (19) durch ein Wärmemedium (27), das in einem dritten Wärmetauscher (20) vorgesehen ist, absorbiert wird,
das Abgas nach der Behandlung des Abgases durch die CO₂-Rückgewinnungsvorrichtung (1) durch einen vierten Wärmetauscher (18) durch die Wärme aus dem Wärmemedium (27) erwärmt wird, das von dem dritten Wärmetauscher (20) zugeführt wird,
wobei das Verfahren weiterhin den Schritt des Erwärmens des Abgases nach der Behandlung des Abgases durch die CO₂-Rückgewinnungsvorrichtung (1) durch Verwendung des in dem Kessel (10) erzeugten Dampfes umfasst.

## Revendications

1. Système de traitement de gaz d'échappement comprenant un appareil de récupération de CO₂ (1) qui récupère le CO₂ provenant d'un gaz d'échappement évacué d'une chaudière (10) ou d'une turbine, et un appareil de retrait de VOC (19) qui retire un VOC du gaz d'échappement (3) après que le gaz d'échappement a été traité par l'appareil de récupération de CO₂ (1), le système de traitement de gaz d'échappement comprenant :
un dispositif de chauffage (16 ; 18 ; 33) qui chauffe un gaz d'échappement après que le gaz d'échappement a été traité par l'appareil de récupération de CO₂ (1) et avant que le gaz d'échappement ait été traité par l'appareil de retrait de VOC (19) ; et
un dispositif de refroidissement (20) qui refroidit le gaz d'échappement après que le gaz d'échappement a été traité par l'appareil de retrait de VOC (19),
un premier échangeur de chaleur (12) qui amène un milieu de chaleur à absorber la chaleur du gaz d'échappement (3) prévu entre la chaudière (10) ou la turbine et l'appareil de récupération de CO₂ (1), et
un deuxième échangeur de chaleur (16) qui libère la chaleur provenant du milieu de chaleur fourni à partir du premier échangeur de chaleur (12) pour chauffer le gaz d'échappement après que le gaz d'échappement a été traité par l'appareil de récupération de CO₂ (1), dans lequel
le dispositif de refroidissement comprend un troisième échangeur de chaleur (20) qui amène un milieu de chaleur à absorber la chaleur du gaz d'échappement après que le gaz d'échappement a été traité par l'appareil de retrait de VOC (19),
un quatrième échangeur de chaleur (18) est prévu, le quatrième échangeur de chaleur (18) libérant la chaleur provenant du milieu de chaleur fourni par le troisième échangeur de chaleur (20) pour chauffer le gaz d'échappement après que le gaz d'échappement a été traité par l'appareil de récupération de CO₂ (1),
le dispositif de chauffage comprend en outre un appareil de chauffage à la vapeur (33) qui chauffe le gaz d'échappement en utilisant de la vapeur après que le gaz d'échappement a été traité par l'appareil de récupération de CO₂ (1), et
la vapeur chauffant le gaz d'échappement dans l'appareil de chauffage à la vapeur est la vapeur générée dans la chaudière (10).

2. Système de traitement de gaz d'échappement selon la revendication 1, dans lequel l'appareil de récupération de CO₂ comprend :
une tour d'absorption (5) qui met un liquide d'absorption de CO₂ en contact avec le gaz d'échappement évacué de la chaudière (10) ou de la turbine pour absorber et retirer le CO₂ du gaz d'échappement ; et
une tour de régénération (7) qui régénère le liquide d'absorption de CO₂ tout en libérant et récupérant le CO₂ du liquide d'absorption de CO₂ en chauffant le liquide d'absorption de CO₂ qui a absorbé le CO₂ dans la tour d'absorption en utilisant de la vapeur,
dans lequel le dispositif de refroidissement comprend une première chaudière à récupération de chaleur d'échappement (30) qui génère de la vapeur en utilisant la chaleur du gaz d'échappement après que le gaz d'échappement a été traité par l'appareil de retrait de VOC, et
dans lequel la vapeur chauffant le liquide d'absorption de CO₂ de la tour de régénération de l'appareil de récupération de CO₂ est la vapeur générée par la première chaudière à récupération de chaleur d'échappement.

3. Système de traitement de gaz d'échappement selon la revendication 1, comprenant en outre :
un cinquième échangeur de chaleur (12) qui amène un milieu de chaleur à absorber la chaleur d'un gaz d'échappement évacué d'une autre chaudière ou d'une autre turbine ; et
un sixième échangeur de chaleur (16) qui libère la chaleur du milieu de chaleur fourni à partir du cinquième échangeur de chaleur pour chauffer le gaz d'échappement après que le gaz d'échappement a été traité par l'appareil de récupération de CO₂.

4. Procédé de traitement de gaz d'échappement comprenant la récupération, par un appareil de récupération de CO₂ (1), du CO₂ d'un gaz d'échappement évacué d'une chaudière (10) ou d'une turbine, et le retrait, par un appareil de retrait de VOC (19), d'un VOC du gaz d'échappement après que le gaz d'échappement a été traité par l'appareil de récupération de CO₂ (1), le procédé de traitement de gaz d'échappement étant **caractérisé en ce qu'**il comprend :
le chauffage, par un dispositif de chauffage (16 ; 18 ; 33), du gaz d'échappement (3) après que le gaz d'échappement a été traité par l'appareil de récupération de CO₂ (1) et avant que le gaz d'échappement ait été traité par l'appareil de retrait de VOC (19) ; et
le refroidissement, par un dispositif de refroidissement (20), du gaz d'échappement après que le gaz d'échappement a été traité par l'appareil de retrait de VOC (19),
l'absorption, du fait d'un premier échangeur de chaleur (12) prévu entre la chaudière (10) ou la turbine et l'appareil de récupération de CO₂ (1), de la chaleur du gaz d'échappement dans un milieu de chaleur, et
la libération, par un deuxième échangeur de chaleur (16), de la chaleur du milieu de chaleur fourni à partir du premier échangeur de chaleur (12) pour chauffer le gaz d'échappement après que le gaz d'échappement a été traité par l'appareil de récupération de CO₂ (1), dans lequel
la chaleur du gaz d'échappement après que le gaz d'échappement a été traité par l'appareil de retrait de VOC (19) est absorbée par un milieu de chaleur (27) fourni dans un troisième échangeur de chaleur (20),
le gaz d'échappement après que le gaz d'échappement a été traité par l'appareil de récupération de CO₂ (1) est chauffé par un quatrième échangeur de chaleur (18) par la chaleur du milieu de chaleur (27) fourni à partir du troisième échangeur de chaleur (20) est libéré,
le procédé comprenant en outre l'étape de chauffage du gaz d'échappement après que le gaz d'échappement a été traité par l'appareil de récupération de CO₂ (1) en utilisant la vapeur générée dans la chaudière (10).
